# EUROPEAN PATENT APPLICATION

(11) **EP 0 559 974 A1**
(43) Date of publication of application: **15.09.1993**
(21) Application number: 92302014.3
(22) Date of filing: 10.03.1992
(51) Int. Cl.: G11B 20/12, G11B 20/18

(54) **Data storage apparatus**

(71) Applicant: Hewlett-Packard Limited, Bracknell, Berkshire RG12 1HN (GB)
(72) Inventor: McCarthy, Dominic, Rangeworthy, Avon BS17 5NA (GB)
(74) Representative: Coker, David Graeme

(57) **Abstract**

Data storage apparatus is provided for storing and retrieving data on tape using a helical scanning write/read technique with data being stored in tracks of predetermined format written across the tape; this track format is, for example, substantially in accordance with the DAT format. The apparatus includes track frame processor both for processing data into said track format prior to being written to tape, and for processing data out of said track format after being read from tape. The processing effected by the frame processor includes error correction processing. The formatting includes a memory (80) for storing data being processed and control means (102) for controlling and coordinating the operation of said frame processor such that data being written to/read from different tracks can be simultaneously handled by the frame processor at different stages of processing thereby. The overall arrangement of the frame processor is such that the processing propagation delay therethrough is substantially 4Q where Q is the time taken to read/write a track, an interval of 2Q being used to transfer data to be stored/retrieved to/from the frame processor, an interval of Q for error processing, and an interval of Q for actually reading/writing the track. As a consequence, for a simple storage/retrieval operation, the memory (80) need only be sized to store data in respect of two tracks. Where a full read-after-write comparison check is carried out during a data storage operation, the data being stored is retained in the memory (80) until the written version of this data is read back; again the arrangement of the frame processor is such as to minimise the total memory requirement. Preferably, the overall system controller (55) of the apparatus has access to the memory (80) of the frame processor in order to retrieve auxiliary codes stored with, and read with, data written to tape.

## Description

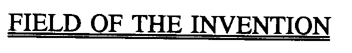

The present invention relates to data storage apparatus for storing and retrieving data on tape using a helical scanning write/read technique with data being stored in tracks of predetermined format written across the tape.

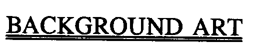

It is well known to store computer data on tape using a helical scan recording technique. Thus, for example, it is known to use DAT (Digital Audio Tape) technology to store computer data in accordance with the DDS (Digital Data Storage) format jointly developed by Hewlett-Packard Limited and Sony Corporation; the DDS format is defined in ISO/IEC Standard 10777:1991 E.

Typically, data storage apparatus using DAT technology comprises a tape deck with a rotary head drum mounting heads for writing/reading data to/from the tape in tracks at a predetermined rate, formatting means both for processing data into said track format prior to being written to tape by said heads, and for processing data out of said track format after being read from tape by said heads, and a system controller for controlling and coordinating the operation of said apparatus.

During data storage, the formatting means carries out a number of functions including receiving and storing data to be processed into said track format, generating error correction codes from the data, combining the data with the error correction codes and with auxiliary codes, generating track signals therefrom and passing the track signals to the head drum for writing to tape. During data retrieval, the formatting means performs the operations of receiving track signals read from tape by said head drum, effecting error detection/correction during processing of data out of said format, and outputting from said formatting means data which has been processed out of said track format.

European patent specification EP-A2-0,437,779 (Archive Corporation) illustrates in general terms one form of formatting means for a DAT-based data storage device. In this case, there are separate read and write audio DAT formatter blocks each with its own local RAM memory.

Generally with regard to DAT-based storage apparatus, because of the complexity of the processing effected by the formatting means, there is a significant processing delay through the formatting means. As a result, it becomes necessary for data in respect of several tracks to be handled at any one time by the formatting means with the data associated with different tracks being at different stages of processing. Thus, it can be seen from a study of the timing diagrams of Figure 4 of EP-A2-0,437,779 that the formatting means of the described storage apparatus has a processing propagation delay therethrough for writing/reading of at least ten times the time taken by the head drum to read/write a track. As a consequence of the large processing propagation delay, the formatting means requires a considerable amount of memory to hold all the data currently being processed; thus, for the apparatus shown in EP-A2-0,427,779 a minimum of six track's worth of data must be stored by each of the local RAM memories.

It is an object of the present invention to provide a structure and sequencing of the formatting means which results in a reduced processing propagation delay.

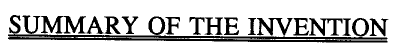

According to one aspect of the present invention, there is provided data storage apparatus for storing and retrieving data on tape using a helical scanning write/read technique with data being stored in tracks of predetermined format written across the tape, said apparatus comprising a tape deck with a rotary head drum mounting heads for writing/reading data to/from the tape in tracks with each track being written/read during a time interval Q and the average transfer rate of tracks to/from the tape being 1/(2Q), formatting means both for processing data into said track format prior to being written to tape by said heads and for processing data out of said track format after being read from tape by said heads, and a system controller for controlling and coordinating the operation of said apparatus; said formatting means comprising:
- memory means for the temporary storage of data being processed by the formatting means in the course of being stored to / retrieved from tape,
- transfer means for receiving and storing in said memory means data to be processed into said track format for storage to tape, and for outputting from said formatting means, data stored in said memory means which has been processed out of said track format after being retrieved from tape,
- error processing means for accessing data stored in said memory means and generating error correction codes during processing of data into said format and effecting error detection/correction during processing of data out of said format, said error correction codes being stored in said memory means,
- a write chain for generating track signals from data, including associated error correction codes, stored in said memory means and for passing said signals to said heads for writing to tape,
- a read chain for receiving track signals read from tape by said heads and for storing in said memory means data represented by said track signals,
- a DMA controller for regulating access to said memory means by said transfer means, said error processing means, said write chain and said read chain, and
- control means for controlling and coordinating the operation of said processing means such that data being stored to/retrieved from different tracks can be simultaneously handled by the formatting means at different stages of processing thereby,
the operation of said formatting means being such that during data storage, in each successive period of 2Q one track is being transferred into said memory means by said transfer means, whilst the track transferred in during the preceding period 2Q is undergoing error processing by said error processing means during a first sub-period Q and being stored to tape through said write chain during a second sub-period Q, and during data retrieval, in each successive period 2Q one track is being transferred out of said memory means by said transfer means, whilst a following track is being retrieved from tape through said read chain during a first sub-period Q and undergoing error processing by said error processing means during a second sub-period Q.

With this structure and sequencing, the data storage apparatus has a processing propagation delay therethrough for simple data storage/retrieval operations of 2Q; as a result, the memory means can be sized to store the data for two, and only two, tracks during such data storage/retrieval operations.

Preferably, data storage involves more than just a simple writing of data to tape and, in particular, involves a read-after-write check to ensure that the data actually stored on the tape is correct. Thus, during the process of writing data to tape, each track of data written to tape is read back and compared with the original form of that data, for which purpose: (i) the the head drum is provided with separate write and read heads that scan the tape alternately such that data written to tape is read back on the same pass of the tape past the head drum, (ii) the memory means is operative to retain data being written to tape after it has been accessed by the write chain in the course of generating corresponding track signals therefrom, and (iii) the formatting means further comprises read-after-write processing means operative during a data writing process to compare data read back after writing with the form of the same data retained in the memory means; the read-after-write means comprising :
- comparator means,
- means operative to cause data which has been read back by the head drum to be processed by the read chain and passed to the comparator means, and
- means for identifying read-back data and for accessing the corresponding data in the memory means and passing it to the comparator means for comparison with the read-back data,
the comparator means being operative to effect a full data compare of the read-back data with the form of that data retained in the memory means and to generate an error indication in the event of a discrepancy between the read-back and retained data.

Advantageously, the read-after-write processing means is operative to access the retained data stored in the memory means by utilising the memory access capability of the write chain and/or to write the error indication to the memory means by utilizing the memory access capability of the read chain.

Generally with read-after-write, the head drum is such that between the end of writing a track and the start of reading back of the same track, there is a delay of 2NQ where N is an integer greater than zero. In this case, the full data compare on that track is prefearbly effected during a sub-period Q when a next-to-be-written track is being processed by the error processing means. With such a sequencing of read-after-write operations, it is possible to arrange for the memory means to be sized to store the data for only (3+N) tracks.

In order to facilitate the processing of auxiliary data that is stored along with the user data, the system controller is preferably operative to access the memory means in order to write/read auxiliary codes therein during data storage/retrieval, the formatting means being operative during data storage to combine the auxiliary codes and data held in the memory means for writing to tape and, during data retrieval, to store in the memory means auxiliary codes recovered with data read from tape. Furthermore, the system controller advantageously comprises a microprocessor operative to access the memory means according to a memory access cycle, the DMA controller being arranged to guarantee the microprocessor access to the memory means during every memory access cycle executed by the microprocessor without delay, whilst also permitting at least one access to the memory means by a functional element of the formatting means during that memory access cycle.

With regard to the control and sequencing of the formatting means, the aforesaid control means preferably comprises a coordinating state machine having a plurality of states arranged in an operating cycle with one state constituting the current state of the state machine at any given time, the state machine being operative to change its current state every period Q in coordination with scanning of the tape by the head drum and to control the operation of the functional elements constituted by the transfer means, the error processing means, the write chain, the read chain and, where present, the read-after-write processing means in dependence on the state machine's current state. Furthermore, the control means advantageously comprises a respective function control circuit for each of the functional elements, the system controller being operative to instruct the coordinating state machine to store/retrieve tracks of data and the coordinating state machine thereupon progressing around its operating cycle of states and in doing so, instructing the function control circuits to activate and control their corresponding functional elements such as to effect the required storage/retrieval of tracks.

As regards the memory means of the formatting means, this preferably includes a plurality of track memory slots each for storing data relevant to a particular track during the course of processing of that data by the formatting means, and address control means connected to the aforesaid coordinating state machine to receive a first indication indicative of the current state thereof and to the DMA controller to receive a second indication indicative of the identity of the functional element given access to the memory means by the DMA controller, the address control means being responsive to said indications to direct access by the accessing functional element to an appropriate one of said slots.

In addition to the formatting means, the data storage apparatus will generally also comprise data organising means, including a buffer memory, operative to effect high-level organisation of data, the formatting means being operatively interposed between the data organising means and tape deck. Typically, for DAT-based storage devices, the data organizing means is operative (i) during data storage, to receive data to be stored and to organize it into frame units each corresponding to two track's worth of data, and (ii) during data retrieval, to disassemble the data out of frame units for output from the apparatus; at the same time, the transfer means of the formatting means is operative (i) during data storage, to transfer data in from the buffer memory of the data organisng means with constituent data elements from each frame unit being interleaved with each other across the whole frame unit, and (ii) during data retrieval, to transfer out said data to the buffer memory to store it therein in de-interleaved form. Where the data storage apparatus operates in accordance with DDS standard, the data organising means controls the assembly/disassembly of data into/out of groups. The fact that the interleaving of data is effected over a frame (and, with respect to the DDS Standard, that data randomisation in transfer between the data organising means and formatting means is also effected over a frame), has previously resulted in the transfer of data between the data organising means and formatting means being carried out on a frame-by frame basis. A consequence of this is that if the formatting means has a substantial processing propagation delay and memory requirement of the formatting means is to be kept low, high transfer rates and processing speeds are required. Accordingly, in a preferred embodiment of the invention, it is now proposed that the transfer means is so arranged that the transfer of data to/from the buffer memory of the data organisng means is effected on a track by track basis with the transfer of data in respect of one track being completed before the transfer of data in respect of the next track is commenced. Such an arrangement enables the processing delay and memory requirement of the formatting means to be kept low at the cost of added complexity to the ordering of data elements being transferred ( and, in the case of apparatus complying with the DDS Standard, to the complexity of the randomising circuitry).

The structure and sequencing of the formatting means of the embodiments of the invention discussed above, all relate to the case where there is an interval of Q between the reading of adjacent tracks as is typically the case with drives using DAT technology. However, the structure and sequencing of the formatting means of the invention can also be applied where successive tracks are read/written immediately one after another. Thus, according to another aspect of the invention, there is provided data storage apparatus for storing and retrieving data on tape using a helical scanning write/read technique with data being stored in tracks of predetermined format written across the tape, said apparatus comprising a tape deck with a rotary head drum mounting heads for writing/reading data to/from the tape in tracks with each track being written/read during a time interval T and the average transfer rate of tracks to/from the tape being 1/T, formatting means both for processing data into said track format prior to being written to tape by said heads and for processing data out of said track format after being read from tape by said heads, and a system controller for controlling and coordinating the operation of said apparatus; said formatting means comprising:
- memory means for the temporary storage of data being processed by the formatting means in the course of being stored to / retrieved from tape,
- transfer means for receiving and storing in said memory means data to be processed into said track format for storage to tape, and for outputting from said formatting means, data stored in said memory means which has been processed out of said track format after being retrieved from tape,
- error processing means for accessing data stored in said memory means and generating error correction codes during processing of data into said format and effecting error detection/correction during processing of data out of said format, said error correction codes being stored in said memory means,
- a write chain for generating track signals from data, including associated error correction codes, stored in said memory means and for passing said signals to said heads for writing to tape,
- a read chain for receiving track signals read from tape by said heads and for storing in said memory means data represented by said track signals,
- a DMA controller for regulating access to said memory means by said transfer means, said error processing means, said write chain and said read chain, and
- control means for controlling and coordinating the operation of said processing means such that data being stored to/retrieved from different tracks can be simultaneously handled by the formatting means at different stages of processing thereby,
the operation of said formatting means being such that during data storage, in each successive period of T, one track is being transferred into said memory means by said transfer means, the track transferred in during the preceding period T is undergoing error processing by said error processing means, and the track that underwent error processing during said preceding period T is being stored to tape through said write chain; and during data retrieval, in each successive period T, one track is being retrieved from tape through said read chain, the track retrieved from tape during the preceding period T is undergoing error processing by said error processing means, and the track that underwent error processing during said preceding period T is being transferred out of said memory means by said transfer means.

According to a further aspect of the present invention, there is provided data storage apparatus for storing and retrieving data on tape using a helical scanning write/read technique with data being stored in tracks of predetermined format written across the tape, the apparatus comprising:
- a tape deck with a rotary head drum mounting heads for writing/reading data to/from the tape in tracks,
- formatting means both for processing data into said track format prior to being written to tape by the heads, and for processing data out of said track format after being read from tape by the heads, and
- a system controller for controlling and coordinating the operation of the apparatus;
   the formatting means comprising:
   - memory means for the temporary storage of data being processed by the formatting means in the course of being written to / read from tape,
   - transfer means for receiving and storing in the memory means data to be processed into said track format for writing to tape, and for outputting from the formatting means, data stored in the memory means which has been processed out of said track format after being read from tape,
   - error processing means for accessing data stored in the memory means and generating error correction codes during processing of data into said format and effecting error detection/correction during processing of data out of said format, the error correction codes being stored in the memory means,
   - a write chain for combininggenerating track signals from data, including associated error correction codes, stored in the memory means with auxiliary codes, generating track signals therefrom, and passing said signals to the heads for writing to tape,
   - a read chain for receiving track signals read from tape by the heads and for storing in the memory means the data and codes represented by said track signals,
   - a DMA controller for regulating access to the memory means by the transfer means, the error processing means, the write chain and the read chain, and
   - control means for controlling and coordinating the operation of the processing means such that data being written to/read from different tracks can be simultaneously handled by the formatting means at different stages of processing thereby,
   the system controller comprising a microprocessor operative to access the memory means in order to retrieve the auxiliary codes read from tape.

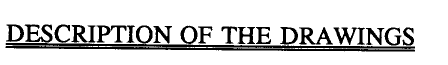

A tape storage device embodying the present invention will now be particularly described, by way of non-limiting example, with reference to the accompanying diagrammatic drawings, in which:
- Figure 1: illustrates the format of a frame written to tape in accordance with the DAT format specification;
- Figure 2A: shows the layout of a tape written according to the DDS format;
- Figure 2B: shows the composition of a recorded data group written in a data area of the tape layout of Figure 2A;
- Figure 3: is a block diagram of a tape storage device arranged to implement the DDS format;
- Figure 4: illustrates a basic group produced by a group processor of the Figure 3 storage device;
- Figure 5: illustrates G1 sub-groups produced by the group processor of the Figure 3 storage device;
- Figure 6: illustrates G2 sub-groups produced by the group processor of the Figure 3 storage device;
- Figure 7: illustrates the composition of a G3 sub-group transferred between the group processor and DAT electronics of the Figure 3 storage device;
- Figure 8: illustrates one array of twin arrays that form a G4 sub-group produced by the DAT electronics of the Figure 3 storage device;
- Figure 9: illustrates the composition of a main data block produced by the DAT electronics of the Figure 3 storage device;
- Figure 10: illustrates the composition of a sub data block produced by the DAT electronics of the Figure 3 storage device;
- Figure 11: shows the format of track signals transferred between the DAT electronics and a DAT deck of the Figure 3 storage device;
- Figure 12: is a block diagram of a preferred implementation of the frame processor function of the Figure 3 storage device;
- Figure 13: is a diagram illustrating the main timing signals used by the Figure 12 frame processor;
- Figure 14: is a table showing the organisation of a track slot of a track RAM memory of the Figure 12 frame processor;
- Figure 15: is a table showing the allocation of data bytes to address locations within the track RAM memory of the Figure 12 frame processor;
- Figure 16: is a table showing the allocation of data bytes between positive and negative azimuth tracks;
- Figure 17: is a block diagram of a transfer functional block of the Figure 12 frame processor;
- Figure 18: is a diagram of a track byte address generator of the transfer functional block of Figure 17;
- Figure 19: is a table showing the sequences of addresses generated by the address generator of Figure 18;
- Figure 20: is a block diagram of a slot interleave address generator of the transfer functional block of Figure 17;
- Figure 21: is a block diagram of a randomiser generator of the transfer functional block of Figure 17;
- Figure 22: is a block diagram of a write chain of the Figure 12 frame processor;
- Figure 23: is a block diagram of a read chain of the Figure 12 frame processor;
- Figure 24A: is a timing diagram illustrating the sequencing of operations of the Figure 12 frame processor during the retrieval of data from tape;
- Figure 24B: illustrates the processing operations undergone by data being read from first and second tracks A and B;
- Figure 25: is a table showing the utilisation of track slots of the track RAM of the Figure 12 frame processor during the data retrieval operation illustrated in Figure 24;
- Figure 26: is a table showing the control of the main functional blocks of the Figure 12 frame processor and the allocation of track slots during the retrieval of data from tape;
- Figure 27A: is a timing diagram illustrating the sequencing of operations of the Figure 12 frame processor during the storage of data to tape;
- Figure 27B: illustrates the processing operations undergone by data being written to first and second tracks A and B;
- Figure 28: is a table showing the utilisation of track slots of the track RAM of the Figure 12 frame processor during the storage operation illustrated in Figure 27;
- Figure 29: is a table showing the control of the main functional blocks of the Figure 12 frame processor and the allocation of track slots during the storage of data to tape; and
- Figure 30: is a diagram illustrating a memory access cycle of a system-controller microprocessor that is arranged to access the track RAM memory of the Figure 12 frame processor.

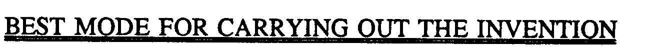

The present invention is described below in relation to a tape storage device that stores and retrieves host computer data on tape generally in accordance with the DDS (Digital Data Storage) Format jointly developed by Hewlett-Packard Limited and Sony Corporation. A detailed specification of the DDS format is given in ISO/IEC Standard 10777:1991 E. The DDS format for the storage of computer data utilises and builds upon the 48 KHz mode of the DAT (Digital Audio Tape) format used for the storage of PCM audio data. The DAT format and, accordingly, the DDS format, both employ a helical-scan recording technique in which tape storage medium is moved obliquely over a rotating head drum with a 90° wrap angle. The drum carries at least two heads which every revolution of the drum together serve to read/write a pair of overlapping, opposite azimuth, tracks known as a frame.

Tape storage devices implementing the DDS format are available, inter alia, from Hewlett-Packard Limited and are generally referred to as DDS drives.

To facilitate an understanding of the present invention, a brief overview of the main features of the DDS format will now be given following by a description of the main functional elements of a DDS drive.

### DDS Format Overview

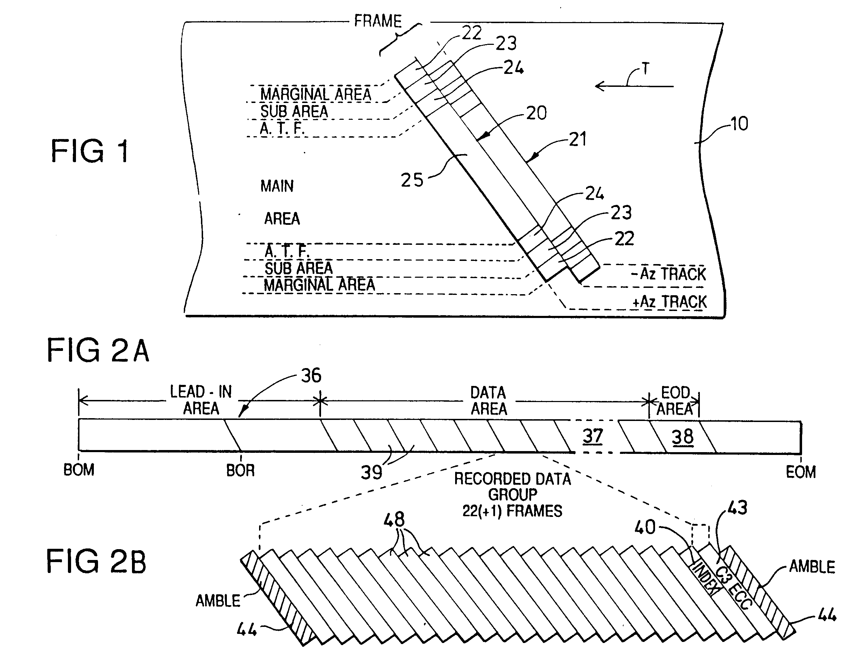

The basic unit for writing and reading information to/from a tape 10 is a frame. Figure 1 illustrates the format of a frame which, as already mentioned, is made up of two opposite azimuth tracks 20, 21. In Figure 1, the arrow T indicates the direction of tape movement. Each track comprises two marginal areas 22, two sub areas 23, two ATF (Automatic Track Following) areas 24 and a main area 25. The ATF areas 24 provide signals enabling the heads of the head drum (not shown) to accurately follow the tracks in known manner. The main area 25 is used to store the data (host data) provided to the tape device by the host computer (the host data comprises user data supplied as records by the host computer and separator marks that indicate logical separation of the user data). The sub areas 23 are primarily used to store auxiliary information known as sub codes that relate for example, to certain recording parameters (such as format identity, tape parameters etc), and tape usage history. Data is stored in the main area in 128 blocks, and in each sub area 23 in 8 blocks. Each block starts with a sync byte and has a 3-byte header followed by a 32-byte data area. The block header includes two information bytes W1, W2 one of which is a block address byte that uniquely identifies the block within the current track. The header also includes a parity byte.

The general organisation of frames along a tape (that is, the tape layout) is illustrated in Figure 2A. As can be seen, the tape is organised into three main areas, namely a lead-in area 36, a data area 37 and an end-of-date (EOD) area 38. The ends of the tape are referenced BOM (beginning of media) and EOM (end of media). Host data is recorded in the main areas of the frames written in the data area 37. The lead-in area 36 includes a system log area, between a beginning-or-recording (BOR) mark and the data area 37, where system information is stored. A tape Area ID sub code stored in the sub area 23 of each frame, enables the system log area, data area 37 and EOD area 38 to be distinguished from one another.

As shown in Figure 2B, the frames 48 of the data area are arranged in recorded data groups 39 each of twenty two valid frames (plus an optional frame 43 - the C3 ECC frame - storing error correction code for the group).

Within a group, user data and separator marks are separately stored, the user data being stored as a continuous run of bytes across the main areas of successive frames without record markers, while information on the division of user data into records and the separator marks are held in an index 40 that extends forwards from the end of the main area of the last frame in the group. (Note that the index will in fact be physically dispersed within the last frame due to a byte-interleaving process employed during recording after formation of the index.)

These recorded data groups are separated from each other by one or more amble frames 44 the main areas of which are optionally filled with a randomised all-zeroes pattern. Ambles are only permitted in the data area 37.

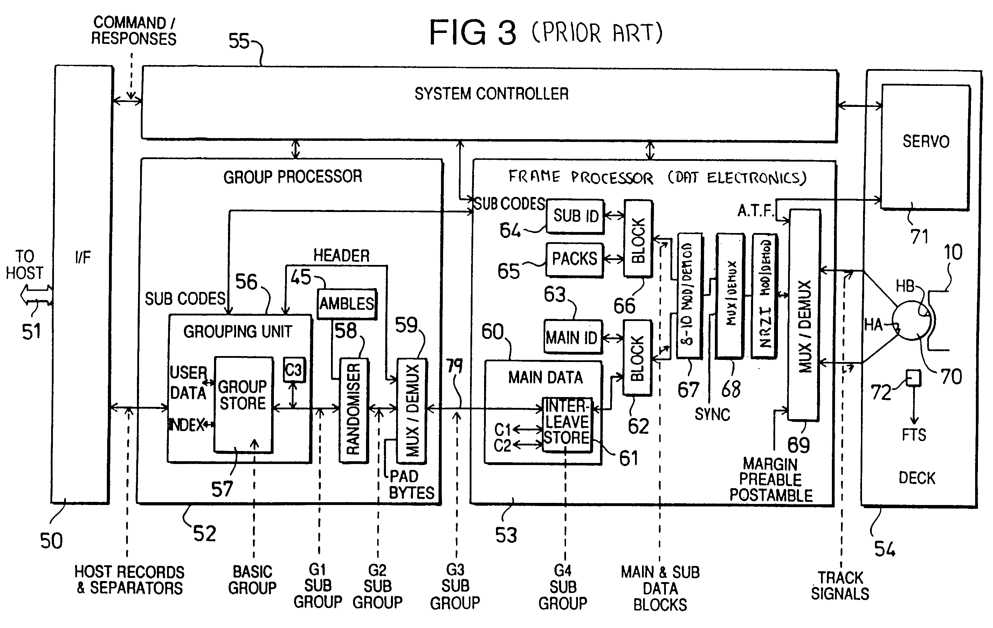

Figure 3 is a functional block diagram of a DDS drive. The device comprises:
- an interface unit 50 for interfacing the drive with a host computer (not shown) via a bus 51;
- a group processor 52 for processing user data records and separator marks into and out of indexed groups;
- a frame processor 53 (also referred to herein as DAT electronics) which effects low-level signal processing, generally as specified in the DAT standard, but with certain modifications as specified in the DDS format; this low-level processing serves to convert bytes supplied to it by the group processor 52 into track signals ready for recording and to reconvert track signals back into bytes for the group processor;
- a helical-scan tape deck 54 for writing to and reading from a tape medium; and
- a system controller 55 for controlling the operation of the other elements of the drive in response to commands received from the host via the interface unit 50.

The drive is arranged to respond to commands from the host computer to load/unload a tape, to store a data record or separator mark, to search for selected separator marks or records, and to read back the next record.

The interface unit 50 is arranged to receive the commands from the computer and to manage the transfer of data records and separator marks between the tape storage device and computer. Upon receiving a command from the computer, the unit 50 passes it on to the system controller 55 which, in due course, will send a response back to the computer via the unit 50 indicating compliance or otherwise with the original command. Once the drive has been set up by the system controller 55 in response to a command from the computer to store or read data, the interface unit 50 will also control the passage of records and separator marks between the computer and group processor 52.

As an understanding of the processing effected iin a DDS drive will considerably assist an understanding of the present invention, a general description of the functionality of the Figure 3 drive is given in the next section with reference to Figures 3 to 12. However, this next section may be omitted by persons with a good working knowledge of the DDS format.

It should be noted that the Figure 3 DDS drive and the following related description, disclose a series of functional transformations that data being written to, or read from, tape must undergo in processing by a DDS drive; however, it is not necessary for each functional transformation to be carried out as an explicit separate step but only that the totality of the functional transformation to which data is subject as it passes through the drive corresponds to the combination of the individual transformations illustrated and described with reference to Figure 3. Thus, the functional blocks illustrated in Figure 3 may not have any direct equivalent in a particular implementation of a DDS drive, though equivalent functionality will be somewhere provided.

### General Description of Functionality of Figure 3 Drive

A description will now be given of the general operation of the drive in terms of the writing of data to tape; the operation of the drive during reading of data will be apparent to persons skilled in the art as processes are either simply reversed or data assembled during writing to aid the reading process is appropriately put to work during the latter (for example, error-correction codes calculated during writing are used during reading to correct errors).

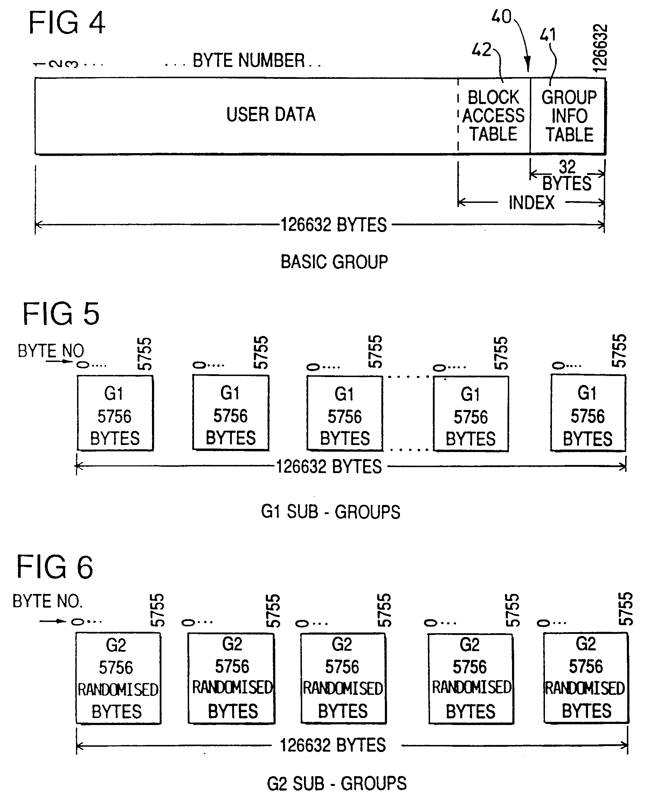

During data storage a grouping unit 56 of the group processor 52 is arranged to organise the data that is provided to it in the form of user data records and separator marks, into data packages referred to as "basic groups". The grouping unit 56 is also arranged to construct the index for each basic group. The unit 56 assembles each basic group in a group store 57. The form of a basic group is illustrated in Figure 4 and, as can be seen, each basic group comprises 126632 bytes in all divided between user data (without any record marks) and an index 40 grown from the end of the basic group. The index 40 itself comprises two main data structures, namely a group information table 41 storing general information about the basic group (number of records, separator marks, etc), and a block access table 42 containing more specific data on the contents of the group (including information regarding the division of user data into records and the logical location of separator marks). The group information table 41 is stored in a fixed location at the end of the group and is the same size (32 bytes) regardless of the contents of the basic group. In contrast, the block access table 42 varies in size depending on the contents of the group and extends from the group information table backwards into the remainder of the user data area of the frames of the group. Entries are made in the block access table from the group information table backwards to the boundary with user data.

During data writing when the host is ready to pass a data record, the interface 50 asks the grouping unit 56 whether it is ready to receive the record. The grouping unit 56 may initially send a "wait" reply but, in due course, enables the transfer of the data record from the host to the group store 57.

Typically, a host transfers records one at a time although multiple record transfers may be permitted for shorter records.

The record will be transferred to a group store location that corresponds to the eventual positioning of the record user data within the basic group of which it is to form a part. Information on the size of the record is used by the grouping unit 56 to update the group index. The index is constructed in a location in the group store appropriate to its position at the end of a basic group.

If a transfer from the host cannot all fit inside a basic group, it is said to "span" the group boundary. The first part of the transfer goes into one basic group and the rest into one or more subsequent basic groups. If no span occurs, the group index is updated and the grouping unit 60 waits for another write command. If a span occurs, the index of the current basic group is updated and that group is available for writing to tape. The next group is begun and the data from the host goes directly into the beginning of that new basic group. When the host sends a separator mark the grouping unit 56 will update the index of the current basic group accordingly.

The grouping unit 56 also generates certain sub-codes relevant to the current basic group such as the number of separator marks and records received counted from the first group.

During data writing, each basic group is transferred out of the group store in twenty two blocks each of 5756 bytes known as G1 sub-groups (see Figure 5). Each such sub-group eventually forms the data contents of a respective recorded frame. Each G1 sub-group is allocated an identifying number known as the logical frame identification number (LF-ID) which the grouping unit 56 incorporates into a header. This header is subsequently combined into the main data stream along with the associated G1 sub-group (see below).

Optionally, the grouping unit may also calculate an error correction code (C3 code) block for each basic group. This C3 code forms its own G1 sub-group that is appended as a twenty third sub-group to the stream of sub-groups transferred out the grouping unit.

When data is being read from tape, the grouping unit 56 is arranged to receive G1 sub-groups and write them into the group store 57 in such a manner as to build up a basic group. The grouping unit 56 can then access the group index to recover information on the logical organisation (record/entity structure, separator marks) of the user-data in the group. Using this information, the group processor 52 can pass a requested record or separator mark to the host via the interface 50. The assembly of G1 sub-groups back into a basic group is facilitated by the associated logical frame IDs provided to the grouping unit 56 in the headers stripped from the sub-groups earlier in the reading process. Returning now to the description of the data writing process, the G1 sub-groups output from the grouping unit 56 are subject to a randomising process, of known form, in randomiser 58 in order to provide a consistent RF envelope on the read signal, independent of the data pattern in the frame. The output of the randomiser 58 is a succession of G2 sub-groups (see Figure 6).

One or more amble sub-groups may optionally be added to the end of each group of G1 sub-groups fed to the randomiser 58, the control of amble addition being effected by an amble-control functional unit 45 of the group processor 52. These amble sub-groups are written to tape as amble frames. The contents of an amble sub-group are constituted by zero bytes which after processing (including randomising in randomiser 58) form the contents of the main area 25 of the corresponding amble frame, the only data in these main areas being a header associated with each amble. The main purpose of adding in amble sub-groups is to permit uninterrupted writing by the deck 54 if, for any reason, there is a delay in providing the next following group for writing to the deck. Thus, for example, if there is a delay in providing host data to the processor 52 to complete the next basic group, the unit 45 oversees the insertion of one or more amble sub-groups until such time as the processor 52 can complete the next basic group (or until a time-out has been reached and continuous writing is terminated, whereupon a repositioning operation must occur before the next group is written to tape). Any number of amble frames may be written to tape after a recorded data group.

The header associated with each amble sub-group is generated by the grouping unit 56 when the amble-control unit 45 determines that an amble sub-group is to be inserted. The logical frame ID of the header is set to zero to indicate that the sub-group is an amble sub-group and therefore may be ignored during reading when the sub-group is passed to the group processor 52. The sub codes to be recorded in the sub-areas of an amble frame are also provided by the grouping unit 56 and, in fact, comprise sub codes relevant to the last preceding group.

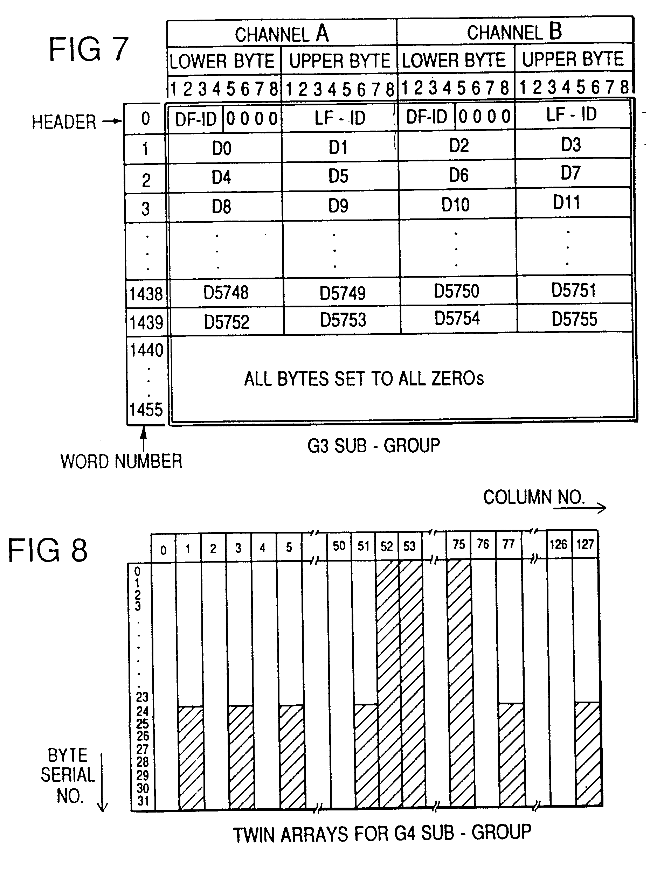

Following the randomiser 58, a multiplexer/demultiplexer 59 combines each G2 sub-group with its header and with a number of all-zero padding bytes needed to conform the size of each sub-group with the audio date frame size of the DAT format. The output of the mux/demux 59 is constituted by a succession of G3 sub-groups each of 5824 bytes conceptually arranged as illustrated in Figure 7 (this arrangement and terminology matches the DAT format). More particularly, the bytes are arranged in rows of four as two 2-byte words, each word being labelled either a channel A word or a channel B word (reflecting the audio associations of the DAT format). The two words in the first row (numbered 0) are constituted by the sub-group header, the words in rows 1 to 1439 are derived from the corresponding G2 sub-group, and the words in rows 1440 to 1455 are the all-zero padding bytes.

As noted above, the header for each sub-group is generated by the grouping unit 56 and is provided in coordination with the output of the corresponding G1 sub-group. The structure of the header of each sub-group can be seen from Figure 7. Again, as already noted, the header contains a Logical Frame ID (LF-ID); this ID is a one byte code stored in the upper byte position of both channels A and B. The first six bits of the LF-ID indicate the running number of each sub group within a group (1 to 23, the optional C3 frame being frame 23) or is set to zero for an amble frame. Bit seven of the LF-ID is set to ONE to indicate the last sub-group of a group (inclusive of any C3 sub-group). Bit eight of the LF-ID is set to ONE only for a C3 sub-group. In addition to the LF-ID, the header includes a four-bit data format ID (stored in the lower byte position of both channels A and B) which for the DDS format is set to 0000.

The G3 sub groups are passed to a main data processor 60 of the DAT electronics 53 where they are processed substantially in accordance with the 48 KHz mode of the DAT format. More particularly, the bytes of each G3 sub-group undergo an interleaving process to form twin arrays as they are fed into an interleave store 61 of the main data processor 60. This interleaving minimises the effects of certain media defects. Two sets of error correcting codes (C1 and C2) are then generated and inserted into the twin arrays held in store 61. Figure 8 illustrates the conceptual form of one of these twin arrays that together constitute a G4 sub group. As can be seen from Figure 8, each array of a G4 sub group is formed by 128 columns each of 32 bytes. After further processing in the DAT electronics 53, the two arrays of a G4 sub-group will form the contents of the main area of respective tracks of a frame.

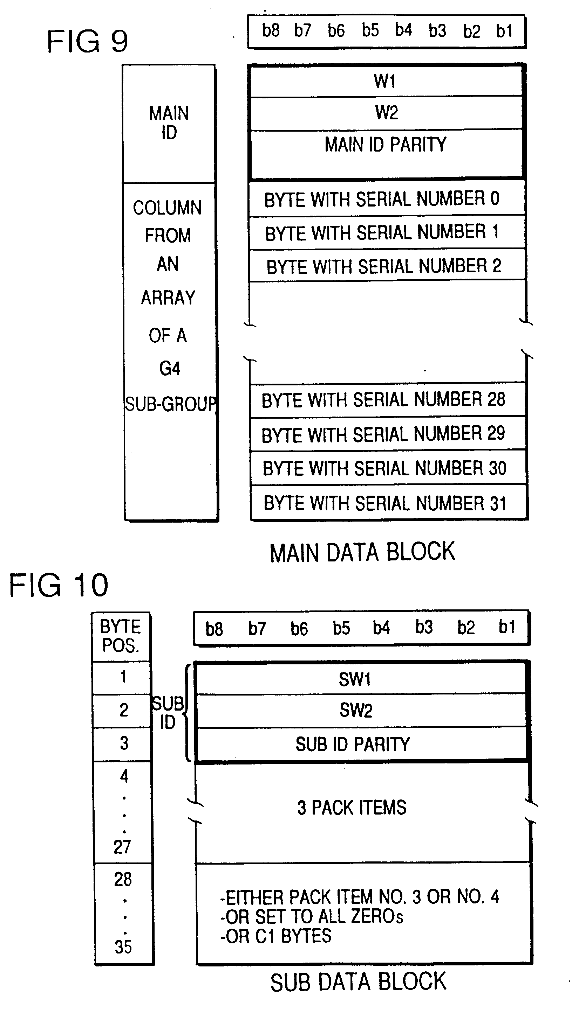

Each array of a G4 sub-group is next formed into 128 main data blocks (see Figure 9) each of 35 bytes by combining the 32 bytes of each array column with a three-byte Main ID in a block multiplexer/demultiplexer 62. The Main ID bytes are provided by a main ID unit 63 and are constituted by two bytes W1, W2 and a parity byte. Byte W1 contains format ID and frame number information and byte W2 contains a block number identifying the current main data block within the set of 128 blocks derived from each G4 sub-group array.

By the foregoing process, each basic group is transformed into 22 pairs of 128 main data blocks (that is 5632 main data blocks) with a further pair of 128 blocks for the C3 and each amble sub-group if present.

In parallel with the generation of the main data blocks, 35-byte sub-data blocks are also generated that contain sub codes supplied to the DAT electronics 53 from the group processor 52 and system controller 55. Thirty two sub-data blocks are generated for each G4 sub group processed (that is, 8 blocks for each of the two sub areas 23 of the two tracks into which the G4 sub group is to be written).

The structure of a sub-data block is illustrated in Figure 10. Each sub data block comprises a three-byte "Sub ID" section 33 and a thirty-two byte "Sub Data" section.

The Sub ID is generated in a sub ID unit 64 and is composed of two information-containing bytes SW1, SW2 and a parity byte. Byte SW2 is used for storing information relating to the current sub data block as a whole (type and address) and the arrangement of the Sub Data section. Byte SW1 is used for storing sub codes and in particular, the Area ID indicating the current tape area (this sub code is supplied by the system controller 55).

The Sub Data section of each sub data block is generated in unit 65 and is composed of thirty two bytes arranged into four eight-byte "packs". Each pack is used to store a pack item; there are a number of different types of pack item each holding a particular set of sub codes. The mapping of pack items into the sub data packs is dependent on the current tape area and not all pack items will be present in any given tape area. The identity of the pack item held in a sub-data pack is indicated by a pack-item code that occupies the first half byte of each pack item stored in a pack. With regard to the fourth pack, for every even block this pack is either set to zero or contains the same pack item as the third pack, while every odd block the fourth pack contains a C1 parity byte for the first three packs of the current block and all four packs of the preceding even-numbered sub-data block.

By way of example, pack items coded 1 and 2 contain group, separator, and record counts while pack items 3 and 4 both contain area ID, absolute frame number, LF-ID and check sum data. Pack 3 of every odd sub data block contains pack item 3 while pack 3 of every even sub-data block contains pack item 4.

Certain of the sub code data stored in the packs are cumulative totals of events (such as number of groups) taken from BOR. This is made possible by storing historical data on such events in the packs of the system log area at the end of each tape usage session and then retrieving this data at the start of a new session.

The sub-ID bytes and the packs of the sub-data section are assembled into sub-data blocks by a sub-data block multiplexor/demultiplexor 66.

The final step in the writing process is to generate the track signals containing the main data blocks and sub data blocks. In order to avoid undesirable flux transitions, each 8-bit byte of the main data and sub-data blocks is transformed into a suitable 10-bit pattern, the resultant bits being termed "channel bits". This transformation is carried out by the 8-10 transformation unit 67 shown in Figure 3.

After this transformation, a predetermined 10-channel-bit sync field is added to the front of each transformed main data and sub data block thereby forming 360-channel-bit blocks referred to as "recorded main data blocks" and "recorded sub data blocks" respectively. This operation is carried out by multiplexor/demultiplexor 68.

Finally, the recorded data blocks are combined with other types of 360-channel-bit recorded blocks (described below) in multiplexor/demultiplexor 69 to form track signals to be fed alternatively to the head HA and HB of the head drum 70 of the deck 54.

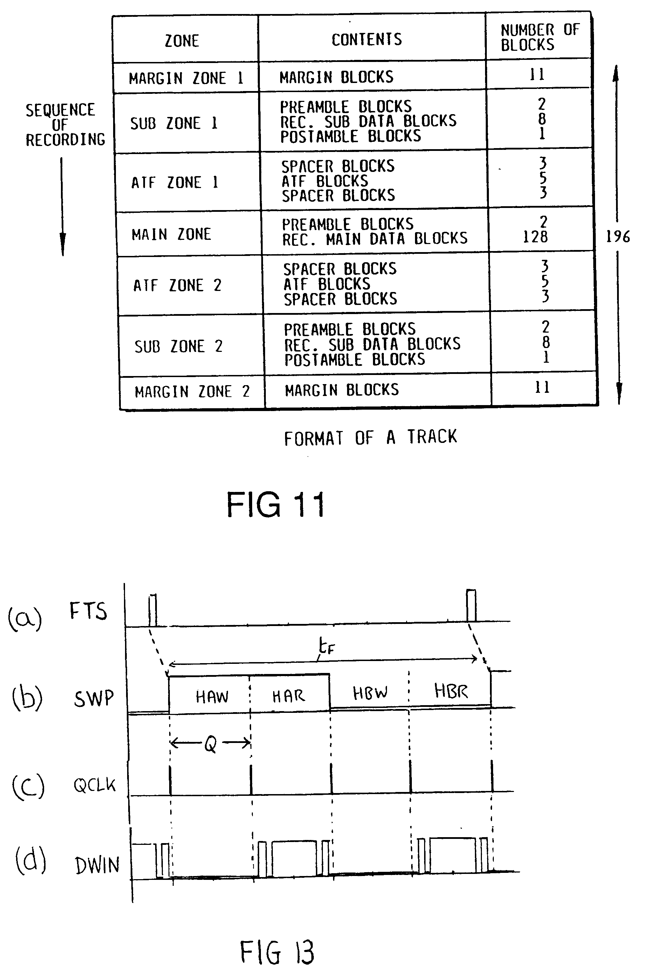

The sequence of recorded blocks does, of course, determine the format of each track (this format has already been described in general terms with reference to Figure 1). A more detailed break down of the composition of each track in terms of recorded blocks is shown in Figure 11. As can be seen, each track contains 196 recorded blocks with the 128 recorded main data blocks corresponding to one array of a G4 sub-group, being recorded between two groups of eight recorded sub data blocks. In addition to these recorded main data blocks and recorded sub data blocks, the following recorded block types are present:
- Margin block, preamble blocks and postamble blocks
   (repeated channel bits pattern "111")
- Spacer blocks
   (repeated channel bits pattern "100")
- ATF blocks
   (predetermined frequency patterns).

The helical scan tape deck 54 is of standard form compliant with DAT specifications and will not be described in detail herein. The low-level control of the deck is effected by a servo unit 71 which itself is controlled by the system controller 55. The unit 71 also indicates beginning-of-media (BOM) and end-of-media (EOM) conditions to the controller 55. Included within the servo unit 71 is automatic track following (ATF) circuitry that, during writing, generates the ATF blocks and, during reading, utilises the ATF signals provided by the heads HA, HB to ensure proper alignment of the heads with the tracks recorded on the tape.

The deck 54 also has a pulse generator 72 arranged to generate a pulse output once every revolution of the head drum 70. This pulse output constitutes a frame timing signal FTS as each drum revolution corresponds to the reading/writing of one frame. The FTS signal is phased to mark the beginning of each frame and is used to synchronise the operation of the DAT Electronics and the transfer of data to/from the grouping unit 56, with the operation of the deck 54.

It will be appreciated that the foregoing description of the Figure 3 drive has concentrated on the functional components of the drive rather than any particular implementation of this functionality. In practice, the processes of the group processor 52 and DAT electronics 53 can be implemented by respective controlling microprocessors with associated application-specific circuitry.

The functioning of the drive during the reading of data is substantially a reverse of the above described write operation but with certain of the auxiliary data assembled during writing being utilised to aid the reading process (for example, error correction codes, block addresses, logical-frame ID).

Furthermore, as well as normal-speed writing and reading, the drive will generally be provided with a fast search capability involving reading the sub areas of occasional frames to locate a desired record.

### Implementation of Frame Processor Functionality

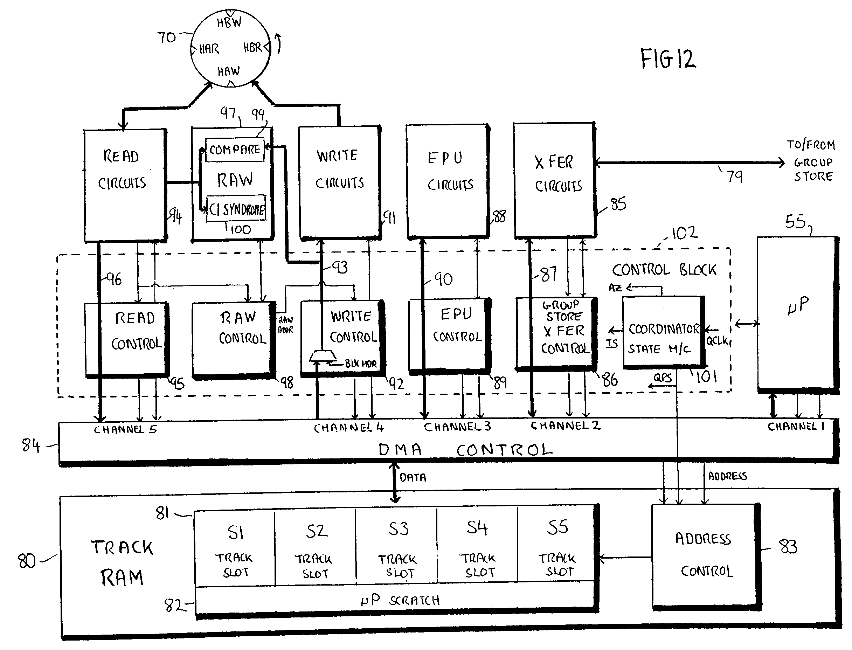

Having described the general functionality provided by a DDS drive, a preferred implementation of the frame processor will now be considered with reference to the block diagram of Figure 12.

The Figure 12 frame processor operates autonomously to transfer a frame of data from the group processor 52 to the head drum 70, or vice versa, once instructed by the system controller 55 to effect the transfer; in the present embodiment, the system controller is constituted by a microprocessor as indicated in Figure 12. In carrying out the transfer of a frame of data, the Figure 12 frame processor is arranged to exchange data with the group store 57 of the group processor 52 (Figure 3) via a byte-wide bus 79 and on a track-by-track basis; this contrasts with previously known arrangements where data is transferred to and from the frame processor in a bit serial manner and on a frame-by-frame basis.

Furthermore, the Figure 12 frame processor is intended to carry out read-after-write checking of data written to tape and accordingly is intended to operate with a head drum 70 provided with four heads, namely two write heads HAW and HBW and two read heads HAR and HBR. Each head scans the tape for one quarter of a revolution of the head drum 70 with the write head HAW being followed by the corresponding read head HAR and the write head HBW being followed by the read head HBR when the head drum is rotated in its intended direction, indicated by an arrow in Figure 12. The geometry of the head drum is such that a track written by a write head HAW/HBW is read one and a quarter revolutions later by the corresponding read head HAR/HBR.

The Figure 12 frame processor comprises a track RAM memory 80 corresponding generally to the interleave store 61 of Figure 3. The track RAM 80 comprises a memory area 81 divided into five track slots S1-S5 each for holding data associated with a respective track and a memory area 82 serving as a scratch pad area for the microprocessor 55. In addition, the track RAM 80 comprises an address control unit 83.

The track RAM 80 serves to hold data and sub-codes whilst these are processed into and out of the afore-described track format by the frame processor 12. Access to the track RAM 80 is governed by a DMA control unit 84 which at any one time allocates access to one of five channels, channel 1 being associated with the microprocessor 55 and channels 2-5 being associated with respective functional blocks of the frame processor.

The main functional blocks of the Figure 12 frame processor are as follows:
Firstly, a transfer functional block comprising transfer circuits 85 and a transfer control unit 86, is operative to exchange data with the group processor 52 via the byte-wide bus 79, an internal bus 87 of the transfer functional block being connected to channel 2 of the DMA control unit 84.

A second functional block of the Figure 12 frame processor performs an error processing function and is constituted by EPU circuits 88 and an EPU control unit 89, a data bus 90 of this functional block being connected to channel 3 of the DMA control unit 84.

A third functional block of the Figure 12 frame processor is formed by a write chain constituted by write circuits 91 and a write control 92, a write data bus 93 of this write chain being connected to channel 4 of the DMA control unit 84.

A fourth functional block of the Figure 12 frame processor forms a read chain constituted by read circuits 94 and a read control 95 with a read bus 96 of this functional block being connected to channel 5 of the DMA control unit 84.

A fifth functional block of the Figure 12 frame processor forms a read-after-write (RAW) function block constituted by RAW circuits 97 and a RAW control 98. This functional block is not directly connected to a DMA channel of the unit 84 but, as will be described more fully below, is arranged to access data in the track RAM 80 through the write chain and to write data into the track RAM 80 through the read chain.

The control units 86, 89, 92, 95 and 98 of the functional blocks the Figure 12 frame processor are sequenced and controlled by a coordinator 101 constituted, in the present embodiment by a controlling state machine; the coordinator 101 and the control units together form a control block 102. The coordinator 101 is itself in turn, controlled by the microprocessor 55, the latter instructing the former to transfer a frame of data either to or from the group processor. Thus, there can be seen to be a hierarchy of control with the microprocessor 55 at the top level, the coordinator 101 at the next level and the control units 86, 89, 92, 95 and 98 at the lowest level.

In general terms, during data storage the microprocessor 55 will instruct the coordinator 101 to oversee the transfer of a frame's worth of data from the group processor 52 to the head drum 70. The coordinator 101 coordinates the various functional blocks of the Figure 12 processor, through their corresponding control units, to carry out the appropriate tasks to effect the transfer requested. These tasks include the transfer in of data from the group processor 52 on a track-by-track basis (effected by the transfer functional block 85, 86), the generation of error correcting codes for each track's worth of data (effected by the EPU functional block 88, 89), and the formatting of each track's worth of data together with sub-codes, block headers and other signals to form a track signal for passing to the head drum 70 (effected by the write chain 91, 92). Where read-after-write checking of data written to tape is carried, then the coordinator 101 also oversees the reading back of data from tape through the read circuis 94 from where it is fed to the RAW circuits 97 for comparison with the original data which has been retained in the track RAM 80 and is now passed via the write chain to the RAW circuits 97. The results of the RAW check are passed through the read circuits 94 to the track RAM 80.

Because the microprocessor 55 has access to the track RAM 80, it can write into the track RAM the G3 sub-group header information (see Figure 7) and the various sub-codes which need to be assembled with the main data for writing to tape. Furthermore, the track RAM 80 is also used to communicate the results of the RAW check from the RAW functional block to the microprocessor 55.

During data retrieval, the microprocessor 55 instructs the coordinator 101 to oversee the transfer of a frame of data from tape to the group processor 52. The coordinator 101 carries out this instruction by controlling the various functional blocks of the frame processor, through their control units, such as to read two tracks of data through the read chain 94, 95 into the track RAM 80, to carry out error checking and correction by reading data out from the track RAM 80 through the EPU functional block 88, 89 and returning the data to the track RAM 80, and finally to transfer data out from the track RAM 80 to the group processor 52 through the transfer functional block 85, 86.

Before a more detailed consideration is given to the structure and operation of the frame processor, consideration will first be given to the more important timing signals used to control the operation of the Figure 12 frame processor and which are made appropriately available to the coordinator 101 and the control units of the various functional blocks.

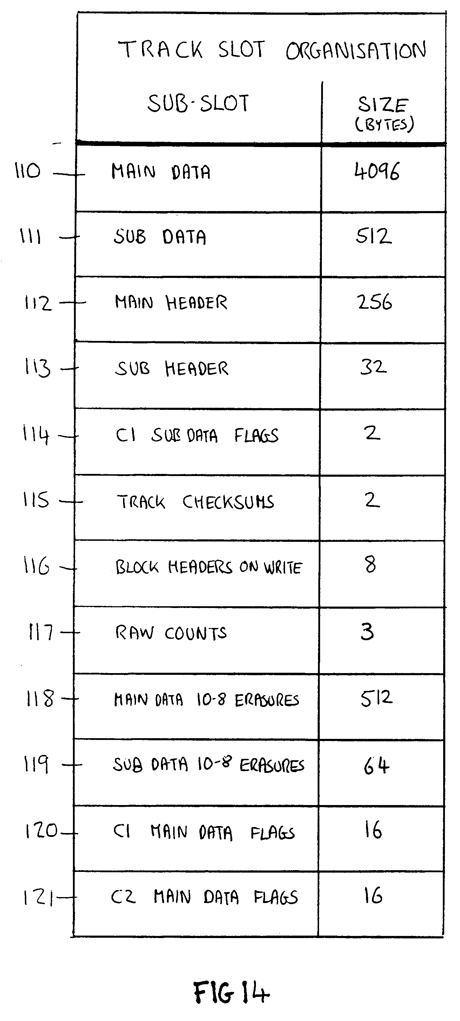

More particularly, a first group of timing signals are derived from rotation of the head drum and are used to synchronize the frame processor with the head drum, these signals being shown in Figure 13. Figure 13 (a) shows the frame timing signal FTS generated off the head drum via the sensor 72 (Figure 3), a timing pulse being generated once every revolution of the drum near the start of the scanning of the tape by the write head HAW. The period of the frame timing signal is referenced as t_{F}, this being the period required for one frame (2 tracks) to be written to/read from tape. The time difference between the occurrence of FTS and when the head HAW first starts to scan the tape is measured during calibration of the drive and then used by timing circuitry (not shown) to generate a head swap signal SWP (see Figure 13b) from the signal FTS, the signal SWP being high when the write and read heads HAW and HAR are over the tape and low when the write and read heads HBW and HBR are over the tape. The period of the SWP is also t_{F}. As shown, each head is over the tape for one quarter of the frame period t_{F}; this quarter period t_{F}/4 for which each head is over the tape will hereinafter be generally referred to as of duration Q.

The timing circuitry is also used to generate the signals QCLK and DWIN shown in Figures 13(c) and (d). The signal QCLK is a clocking signal of period Q which is used to synchronize the coordinator 101 to the head drum 70, each clock signal QCLK causing the coordinator state machine to change its current state. The signal DWIN shown in Figure 13(d) is arranged to be high whenever a read head is over a portion of a track carrying data (sub zone 1, main zone, and sub zone 2 of Figure 11). This signal is used by the read circuits 94.

In addition to the foregoing timing signals that serve to coordinate the frame processor electronics to the head drum, there is, of course, an internal system clock signal SYSCLK generally determining the processing speed of the frame processor functional elements. Processing speeds in the read and write chain are however determined by respective write and read clocks, the write clock being an internal clock set to the intended data rate of the write chain, and the read clock being a phased-locked loop locked to the signal read from tape.

Three other important control signals used in controlling the functional blocks of the Figure 12 frame processor, are an azimuth signal AZ, a quarter-period state signal QPS, and an initiate processing signal IS, all of which are generated by the coordinator 101. The azimuth signal AZ is a binary signal set in one state during the first two quarter periods following the microprocessor 55 instructing the coordinator 101 to oversee the processing of a frame, and into its other state during the following two quarter periods; the significance of each state of the azimuth signal will depend on the receiving functional block and may indicate that a positive azimuth track is to be processed by one block whilst simultaneously indicating to another block that a negative azimuth track is to be processed. The azimuth signal AZ thus serves a synchronizing role.

The signal QPS performs a synchronizing and sequencing role in that it is used to indicate to the functional blocks of the frame processor, the current state of the state machine. The signal IS is generated by the coordinator at the start of each quarter period upon the coordinator state machine entering each new state and is fed to each of the functional blocks that are to be active in that coordinator state, in order to initiate processing by that block. It will be appreciated that the functionality of the signals QPS and IS could be provided in other ways, for example by a respective initiation signal for each type of operation to be effected by each block, that signal being activated upon the coordinator entering the corresponding state.

The main elements of the Figure 12 frame processor will next be considered in more detail.

### Track RAM

The DMA control unit 84 grants access to the track RAM 80 in response to requests received in respect of each of the DMA channels 1-5, on a priority basis the order of priority being as follows:
Channel 1 - microprocessor 55
Channel 5 - read chain 94, 95
Channel 4 - write chain 91, 92
Channel 2 - transfer functional block 85, 86
Channel 3 - error processing block 88, 89.

Data relating to a particular track is stored in an associated track slot during the processing of that track by the frame processor. The allocation of tracks to track slots is effected by the address control unit 83 on a cyclic basis as will be more fully described hereinafter. The identity of the track slot which each functional block is allowed to access during any frame quarter period Q is then controlled by the control unit 83 in dependence on the current state of the coordinator state machine 101 and on the identity of the accessing functional block such that the track data is appropriately sequentially processed by the functional blocks. Within each track slot, the memory location addressed is set by a slot offset address provided by the accessing functional block.

As already indicated the microprocessor 55 can access the track RAM through DMA channel 1. The microprocessor 55 can access any track slot for the purpose of reading or writing relevant data and, in particular, for the purpose of writing G3 header information and sub code information into the track slot of a track to be written during a data storage operation and for extracting G3 header information and sub code information from a track slot of a track just read during a data retrieval operation. The microprocessor 55 is thus provided with rapid access to sub code data which is particularly useful in facilitating rapid positioning of the tape in dependence on data read back (for example, record, file or save set counts).

As already noted above, the track memory 80 includes five track slots S1-S5 each intended to store data associated with a respective track. Each of these track slots S1-S5 is organized into twelve sub-slots as indicated in Figure 14. More particularly, each track slot includes a main data sub-slot 110 of 4096 bytes for storing the 128, 32-byte blocks of the main zone of a track (that is, the data of one of the twin arrays of a G4 sub-group, this data being data passed from the group store of the group processor 52, G3 header information and C1 and C2 code data); and a sub-data sub-slot 111 which is 512 bytes in size and is used to store the contents of the eight data blocks of sub zones 1 and 2 of a track. In addition to the two primary data-carrying sub slots 110 and 111, each track slot comprises a main header sub slot 112 and a sub header sub slot 113, sized as indicated in Figure 14, for holding data relevant to the block headers (main ID and sub ID) of the main and sub zones of tracks read from tape; three flag areas 114, 120 and 121 for holding flags indicating the state of ECC checks carried out by the EPU blocks (sub slot 114 relating to C1 sub data flags, sub slot 120 relating to C1 main data flags and sub slot 121 relating to C2 main data flags), a sub slot 115 for holding track check sums; a sub slot 116 for holding data for constructing block headers on write; a sub slot 117 for holding a blocks-in-error count in respect of a C1 syndrome check carried out during read-after-write checking of data written to tape; and two sub slots 118 and 119 for holding indicators of the presence of invalid 10-8 modulation code words in data read back from tape, sub slot 118 relating to main data and sub slot 119 to sub data.

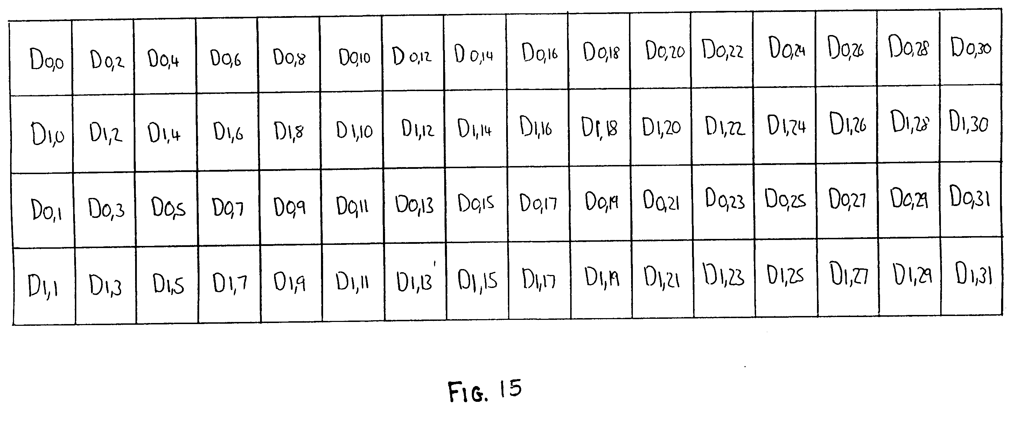

Preferably, the ordering of data bytes in the main data and sub-data sub-slots 110 and 111 of each track slot is such as to expedite transfer of data to and from the EPU functional block 88,89 during CI processing, this being achieved by an ordering that facilitates word transfers (that is, two adjacent bytes) rather than single byte transfers between the track RAM and the EPU functional block. This ordering differs from the ordering of data bytes in the blocks of the main and sub zones of a track due to the fact that an interleave depth of two is specified in the DDS format for CI ECC processing. By way of example, Figure 15 illustrates the disposition of data bytes in track slot for data relevant to the first two blocks of teh main zone of a track, the subscript notation used for data bytes D_{a,b} being that "a" represents the block number within the main zone and "b" represents the byte number within the data area of the current block. As can be seen, data bytes D_{0,0} and D_{0,2}; D_{0,4} and D_{0,6}; D_{0,8} and D_{0,10} etc are all stored in adjacent locations and therefore can be accessed by word transfers by the EPU functional block 88,89 during C1 ECC processing where these byte pairs are successively processed. It will be appreciated that the transfer functional block and microprocessor 55 are operative to read/write main and sub data to/from the track RAM according to the Figure 15 ordering and that the read and write chains appropriately adjust the ordering of data bytes in transferring data between the track RAM and tape.

### Transfer Functional Block

The transfer of a track's worth of data to/from the group processor is arranged to be effected over a period equal to 2Q (that is half the frame period t_{F}) this of course corresponding to the rate at which tracks are written to/read from tape.

When the microprocessor 55 instructs the frame processor to transfer a frame of data to/from the group store, it passes the coordinator 101, the identity of the relevant group within the group store 57 and this information is made available to the transfer functional block 85,86 to enable the latter to access the appropriate group in the group store 57 of the group processor 52. Of course, the transfer functional block 85,86 also needs to know the logical frame number of the frame being processed in order to appropriately access the group store 57. The logical frame number is made available to the transfer functional block by being written in the appropriate byte location of the main-data sub-slot 110 of the relevant track RAM slot (the logical frame number LF-ID forms part of the header of each G3 sub-group and, as such, is stored in sub-slot 110); during data storage, it is the microprocessor 55 which writes the LF-ID into the main-data sub-slot, whilst during data retrieval, the LF-ID is written into the main-data sub-slot by the read chain as it is read back from tape. The transfer functional block 85,86 accesses the LF-ID at the start of each cycle of its operation by a DMA access to the appropriate location of the relevant main-data sub-slot.

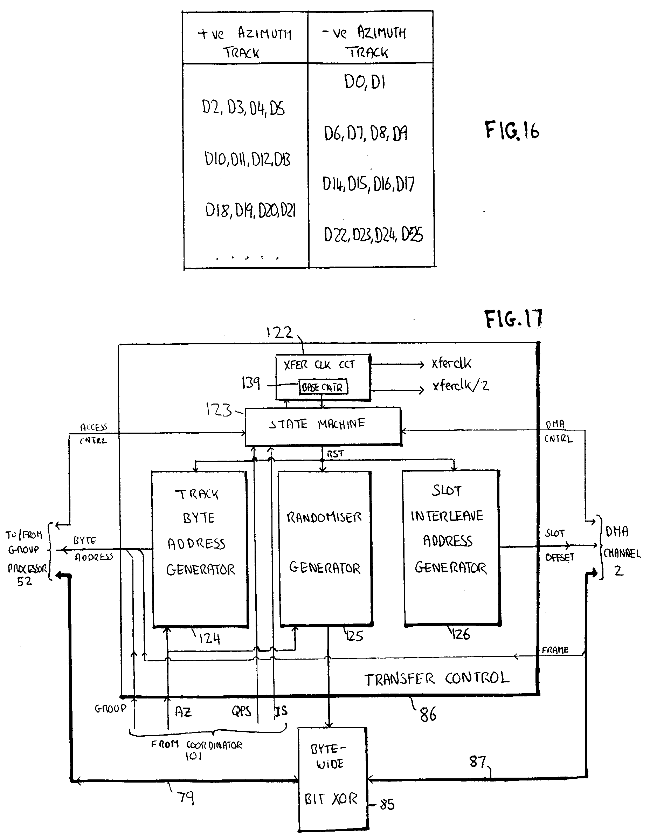

As already indicated, data is transferred to and from the group store of the group processor over a byte-wide bus 79 on a track-by-track basis, that is the transfer of data in respect of one track is completed before the transfer of data in respect of the next track is initiated. This arrangement contrasts with existing DAT based storage devices where data transfer is effected on a frame-by-frame basis. According to the DAT format specification, serially supplied data is interleaved between the two tracks making up a frame in order to minimize the effect of tape imperfections, data errors in one track being in many circumstances recoverable on the basis of the data in the other track of the same frame. Figure 16 shows the allocation of data bytes of a G1 sub-group (sequentially numbered D0, D1 upwards) between positive and negative azimuth tracks. Furthermore, not only is data interleaved across a whole frame but the randomising function carried out by the randomizer block 58 in Figure 3 is also carried out on a frame by frame basis, the DDS Format Standard specifying the randomizing function in terms of a linear feedback shift register that is re-initialized at the start of each frame (that is, before each G1 sub group is transferred to/from the group store 52), the output of this register being combined with data sequentially transferred to/from the group store.

Because of this randomising and interleaving of data across a frame, it is clearly more straight forward to transfer data on a frame-by-frame basis, as this simply requires the strict sequential access of data held in the group store 57 with randomising and interleaving being effected according to the standard functions specified for DDS. However, transfer of data on a frame-by-frame basis has the effect of increasing the latency of the frame processor which in turn results in a greater storage requirement for the frame processor.

For this reason, the transfer functional block 85, 86 of the Figure 12 frame processor is arranged to transfer data on a track-by-track basis to/from the group store 57 of the group processor and, in order to do so, appropriate circuitry must be provided to access the group store and the track RAM 80 in the appropriate sequential manner as required for a track-by-track transfer, and special measures are also required to ensure that randomization (and de-randomization) of the transferred data is effected in accordance with the DDS format standard.

It should be noted that although the functionality of the randomizer 58 is shown in Figure 3 as part of the group processor 52, in terms of practical implementation, it is more convenient to include the randomizer function in the transfer block of the frame processor. (It may further be noted that the functionality of the multiplexer/de-multiplexer 59 of Figure 3 which is there shown to be part of the group processor, is also effectively incorporated into the Figure 12 frame processor in that the header of each G3 sub-group and the pad bytes are directly written into the appropriate slot of the track RAM 80 at the instigation of the micro-processor 55 and are not transferred over the bus 79 from the group processor with the user data).

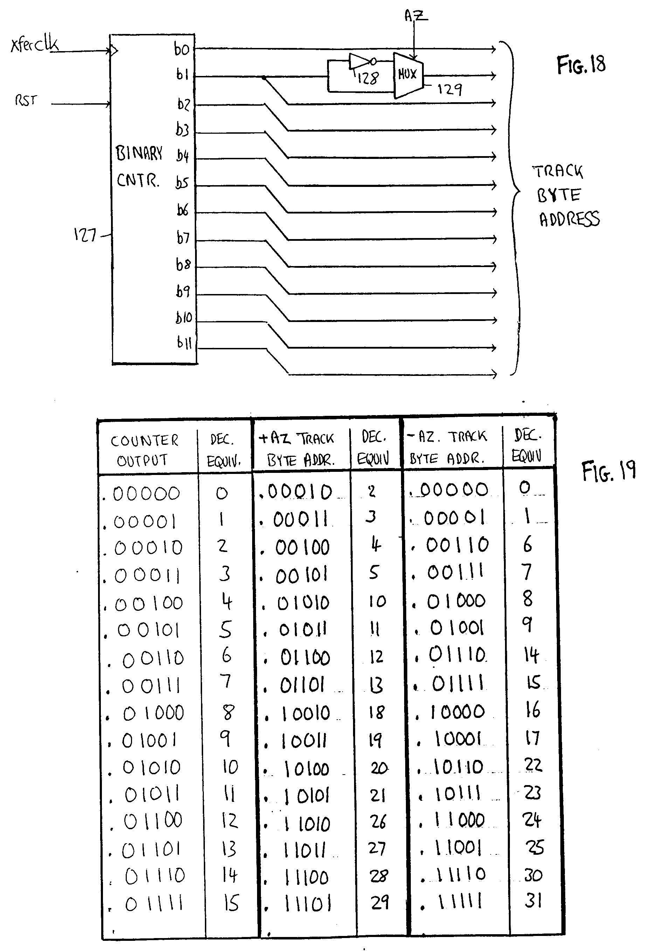

The transfer functional block 85, 86 is shown in Figure 17 and includes a byte-wide exclusive OR circuit forming the transfer circuits 85, which is interposed between the byte-wide bus 79 connected to the group store 57 and the internal bus 87 associated with channel 2 of the DMA controller. This byte-wide exclusive OR circuit 85 carries out an exclusive OR operation on each bit of a data byte provided to it on bus 79/87 with the corresponding bit of a randomizer byte supplied from a randomizer generator 125, the resultant modified byte being output on the other of the buses 87/79; more particularly, during data writing, data passes from the bus 79, is randomized in the circuit 85 and is then output on bus 87 whilst during data reading, a randomized byte is supplied by bus 87, is de-randomized by circuit 85 and output on bus 79. The exclusive OR circuit 85 is the only circuit of the transfer block that performs modification on the data itself, all the other circuits of the transfer block being concerned with address control or generation of the randomizer bytes.

The transfer control unit 86 comprises three main control function elements, namely a track byte address generator 124 for generating the appropriate address for the next access to the group store 57 of the group processor 52, a slot interleave address generator 126 for generating the address within a slot (the slot offset) for the next access to the track RAM 80, and the randomizer generator 125 for supplying randomizer bytes to the exclusive OR circuit 85. These generators 124, 125 and 126 are controlled by a state machine 123 that has an associated transfer clock circuit 122. When triggered by the signal IS from the coordinator 101 at the start of a quarter period when data is to be transferred, the state machine 123 first initiates a DMA access into the track RAM to retrieve the logical frame number LF-ID of the track to be transferred; thereafter, the state machine 123 oversees the transfer of those data bytes from a G1 sub-group that are associated with the particular track being processed, this transfer being effected in the direction between the group store 57 and track RAM 80, that is indicated by the signal QPS from the coordinator 101 (or a related signal indicating whether data is being stored or retrieved). The basic task of the state machine 123 during byte transfer is to coordinate the various handshake procedures necessary to transfer a data byte to/from the group store 57 and to/from the track RAM 80 (via DMA channel 2), the state machine cycling through the necessary handshake control operations once for every byte being transferred. As each byte transfer is complete, the state machine 123 causes the transfer clock circuit 122 to increment a base counter 139 to keep a tally of the number of bytes so far transferred in the current transfer quarter period and also to output a transfer clock pulse XFERCLK and, every other byte transfer, a clock pulse XFERCLK/2; these clock pulses are used in controlling the timing of the generators 124, 125 and 126 as will be more fully described below.

The state machine 123 continues cycling around its states controlling the transfer of each byte in the appropriate direction between the group store 57 and track RAM 80 until the base counter 139 indicates that 2878 bytes have been transferred (that is, the total number of bytes from bytes D0 - D5755 associated with one track) whereupon it ceases its byte transfer operation, outputs a signal RST to reset the generators 124, 125 and 126 and then returns to an idle state awaiting the next triggering from the coordinator 101.

The detailed operation of the state machine 123 in terms of the handshake control for effecting a byte transfer to/from the group store 57 and the track RAM 80 will not be described in detail herein as appropriate implementations will be apparent to persons skilled in the art.

For each byte transferred, the track byte generator 124 generates the appropriate address within a frame for accessing the group store 57 (the group and frame identities being added from the coordinator 101 in dependence on information supplied from the microprocessor 55), the randomizer generator 125 generates the appropriate byte for randomizing/de-randomizing the data byte being transferred, and the slot interleave address generator 126 generates the appropriate slot offset for accessing the track RAM 80. Each of these generators 124, 125 and 126 will now be described in more detail.

Considering first the track byte address generator 124, this generator is required to generate a sequence of addresses for accessing the group store 57 corresponding to the sequence of byte addresses for the positive azimuth track or negative azimuth track within a G1 sub-group, this ordering being that illustrated in Figure 16. The circuitry of Figure 18 illustrates a particularly simple way of generating the appropriate address sequences. A binary counter 127 is clocked by the transfer clock signal XFERCLK, this counter being reset to zero by the signal RST at the end of each track transfer operation. The counter 127 is a 12-bit counter with bit outputs b0 to b11, the output b0 being the least significant bit. The left hand column of the Figure 18 table shows the output bit values for b0 to b5 as the counter is clocked from its reset state for sixteen clock pulses, the decimal equivalent of the binary output being shown in the adjacent column of the Figure 18 table. In order to generate the appropriate sequences of track byte addresses, it is only necessary to use the output from b1 both to provide the 2¹ and 2² weightings of the track byte address and to increase by one the significance of each of the outputs b2 to b11. In providing the 2¹ bit of the track byte address, the output b1 is either taken directly or inverted (by inverter 128) in dependence on the azimuth of the track concerned, the appropriate form of b1 being selected by multiplexer 129 controlled by the azimuth signal AZ supplied from the coordinator 101 with the inverted form of b1 being selected for positive azimuth tracks.

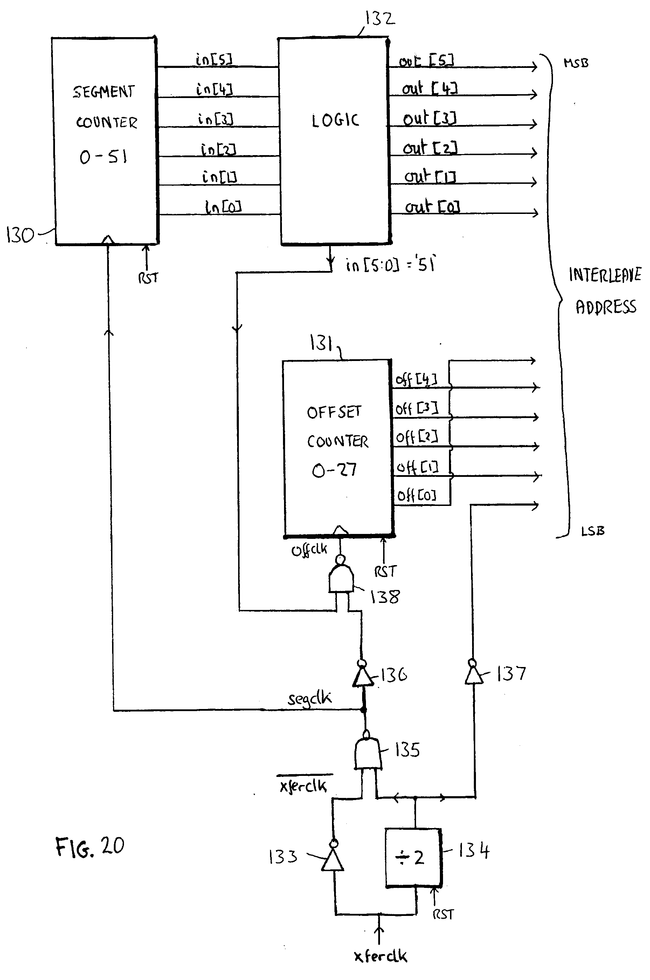

Figure 19 shows the effect of this modification of bit weightings on the resultant track byte address for both positive and negative azimuth tracks. It will be seen that the resultant addresses advanced in a manner corresponding to that required by Figure 16 to select the data bytes appropriate for each track. The track byte address is then combined with the group and frame identities supplied from the coordinator 101 and is then used to access the group store 57.

The interleave address generator 126 is shown in Figure 20, the purpose of this address generator being to ensure that track data bytes are inserted/extracted from the appropriate track slot in an order effecting interleave/de-interleaving in accordance with the DAT standard; in addition, in generating interleave addresses, the interleave address generator 126 takes account of the byte ordering requirements, discussed above with respect to Figure 15, for facilitating word transfers between the EPU functional block and the track RAM during CI ECC processing. The interleave formula of the DAT standard is based on values of 52 and 28 and accordingly, the Figure 19 circuit is provided with a segment counter 130 for counting from 0 to 51 and an offset counter 131 for counting from 0 to 27. Both counters are reset to zero by the reset signal RST produced by the state machine 123 of Figure 17. In general terms, the segment counter 130 is clocked by a signal "SEGCLK" at half the rate of the clock signal XFERCLK, whilst the offset counter 131 is incremented each time the segment counter 130 reaches its counter value of 51. The generation of the clocking signals for the counters 130 and 131 is controlled by logic gates 133, 135, 136, 138 and a D-type flip flop 134, the latter being clocked by the signal XFERCLK.

The interleave address is generated from the outputs "in[0]" to "in[5]" of the segment counter 30 after transformation by logic circuitry 132 to form signals "out[0]" to "out[5]",the outputs "off[0]"to "off[4]" of the offset counter 131 and the output of the D-type flip flop 134 after inversion by an inverter 137. The ordering of the signals making up the interleave address is as shown in Figure 20. The logic circuitry 132 is also used to determine when the outputs of the segment counter 130 indicates a counter value of 51 (this state being depicted in Figure 20 by "in[5:0] = 51").

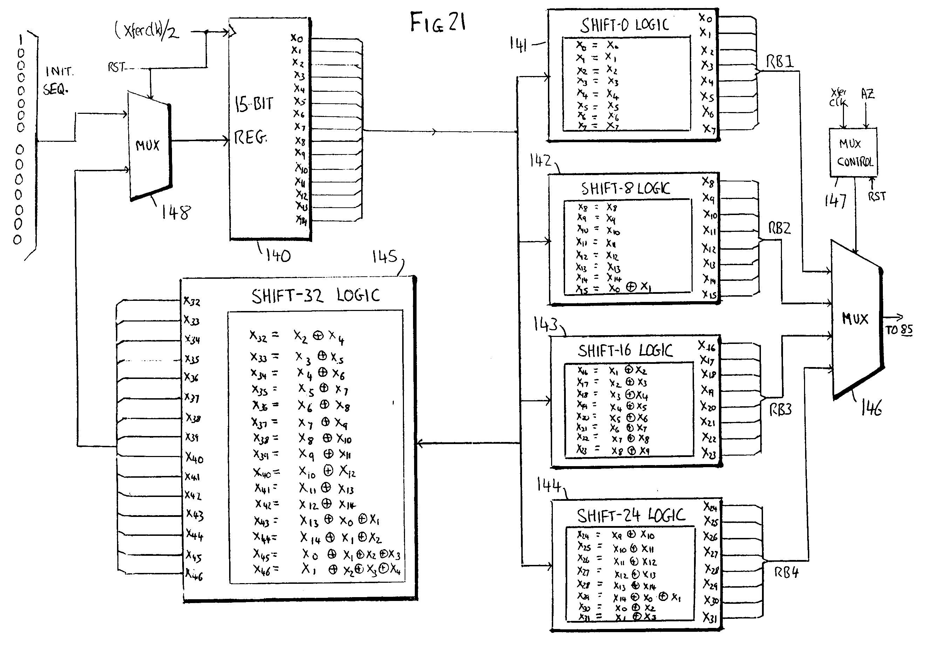

The transformation of the signal "in[]" to the signals "out[]" effected by the logic circuitry 132 is in accordance with the following logic statements:
- out[0] =: in [1];
- out[1] =: (in[0] AND NOT in[2] AND in[3] AND in[4] AND NOT in[5]) OR
(NOT in[0] AND in[2] AND in[4] AND NOT in[5]) OR
(NOT in[0] AND in[2] AND NOT in[4]) OR
(in[0] AND NOT in[2] AND in[3] AND NOT in[4]) OR
(in[0] AND NOT in[2] AND NOT in[3]);
- out[2] =: (in[2] AND in[3] AND NOT in [5]) OR
(in[2] AND in[3] AND NOT in [4]) OR
(NOT in[0] AND in[3] AND in[4] AND NOT in[5] OR
(NOT in[0] AND in[3] AND NOT in[4]) OR
(in[0] AND NOT in[2] AND NOT in[3]);
- out[3] =: (NOT in[0] AND in[3] AND in[4] AND NOT in[5]) OR
(NOT in[0] AND in[2] AND in[4] AND NOT in[5]) OR
(NOT in[2] AND NOT in[3] AND in[4]) OR
(in[0] AND NOT in[2] AND in[3] AND NOT in[4]) OR
(in[0[ AND in[2] AND NOT in[4]);
- out[4] =: (NOT in[2] AND NOT in[3] AND in[5]) OR
(in[0] AND NOT in[2] AND in[3] AND in[4] AND NOT in[5]) OR
(in[0] AND in[2] AND in[4] AND NOT in[5]) OR
(NOT in[4] AND in[5]);
- out[5] =: in[0];
The randomizer generator 125 is illustrated in Figure 21. The randomizer generator shown in the DDS format standard comprises a 15-bit linear feedback shift register with the output bit and proceeding bit being exclusively ORed together and fed back to the input end of the shift register; the shift register is seeded with a 15-bit string all bits of which are zero except the lowest order bit. In the Figure 21 randomizer generator, the linear feedback shift register is replaced by a 15-bit register 140 (the fifteen register cell outputs of which are labelled x₀ to x₁₄) arranged to be initialized on reset by the same sequence as the aforesaid linear feedback shift register. The register 140 is clocked by the clock signal XFERCLK/2 with each clocking of the register being arranged to effect a parallel transfer in of a new 15-bit setting which corresponds to the previous 15-bit value held in the register 140 shifted by 32 (that is, if the previous setting had been held in a linear feedback shift register according to the DDS format standard then the new setting corresponds to the value that would have been held in the shift register after 32 shifts). The bit values resulting from a 32-bit shift are determined by logic circuitry shift-32 logic 145, the new bit values x₃₂ to x₄₆ being fed via a multiplexer 148 back to the input of the register 140 (the multiplexer 148 is also fed with the initial bit sequence, the latter only being selected at reset). The new value of the register 140 after a 32-bit shift is determined by the logic circuitry 145 in accordance with the exclusive OR equations shown within that block in Figure 21; as can be seen, this determination solely relies upon the existing values held in the register 140.

In each state of the register 140, the Figure 21 generator is arranged to provide four randomizer bytes RB1, RB2, RB3 and RB4 respectively corresponding to the lower 8-bits x₀ to x₇ shifted by 0,8,16 and 24 (where a shift refers to the change brought about by the clocking of the linear feedback shift register referenced in the DDS format standard).

Byte RB1 is produced by shift-0 logic 141 effecting the transformation shown within the bounds of that element in Figure 21; in fact, of course it is simply necessary to take the outputs x₀ to x₇ from the register 140 and pass them straight through as byte RB1.

Byte RB2 is generated by shift-8 logic 142 in accordance with the transformation shown within that element in Figure 21. The first seven bits x₈ to x₁₄ of byte RB2 are simply the corresponding output bits of the register 140; the last bit, bit x₁₅, of byte RB2 is formed by an exclusive OR operation on bits x₀ and x₁.

Byte RB3 is generated by shift-16 logic 143 in accordance with the transformation shown within that element in Figure 21, the eight bits x₁₆ to x₂₃ being derived from bits x₁ to x₉ output from register 140.

Byte RB4 is generated by shift-24 logic 144 in accordance with the transformation shown within that element in Figure 21, the eight bits x₂₄ to x₃₁ of byte RB4 being generated from bits x₀ to x₃ and x₉ to x₁₄ output from register 140.

Bytes RB1 to RB4 are then fed to a multiplexer 146 where an appropriate one of these bytes is selected in dependence on the output of a multiplexer control unit 147, the selected byte being fed to the byte-wide exclusive OR circuit 85.

The multiplexer control circuit 147 selects the appropriate byte RB2 to RB4 on the basis of the azimuth of the track being processed and also on the position of the byte being processed in the sequence of bytes within a track. With reference to Figures 16, it can be seen that the first two data bytes from a G1 sub-group required for a positive azimuth track are D2 and D3, these bytes being the third and fourth in the sequence of a G1 sub-group; accordingly, to match up the output of the randomizer generator of Figure 20 to data bytes D2, D3, it is necessary to take randomizer bytes RB3 and RB4. Thereafter, the next two data bytes D4 and D5 must be matched with randomiser bytes corresponding to thirty-two and forty shifts respectively, which, of course requires the next state of the register 140 to be entered in which the basic contents of the register are shifted by 32 from the initial contents; with the register 140 in its new state, the randomizer bytes matching up with data bytes D4 and D5 are bytes RB1 and RB2. Thereafter, for the positive azimuth track, data bytes D10 and D11 are processed and this time in order to match up the randomizer bytes, the state of the register 140 must again be advanced by a further thirty two bits and bytes RB3 and RB4 selected. From the foregoing consideration, it can be seen that the sequence of byte selection required is as follows:-
Positive azimuth of track - RB3, RB4, RB1, RB2, RB3, RB4, RB1, RB2 ....
Negative azimuth of track - RB1, RB2, RB3, RB4, RB1, RB2, RB3, RB4 ....
with the contents of the register 140 being shifted by thirty two, every two bytes. The foregoing selection sequence can be readily implemented by a 0-3 counter clocked by the transfer clock XFERCLK with the azimuth signal AZ being used to introduce a 2-byte offset for positive azimuth of tracks.

### Error Processing

The error processing (EPU) functional block 88, 89 operates during a quarter period Q to access the data of one track from the corresponding track slot in the track RAM 80 and effect appropriate error processing on that data before returning it to the track RAM. During data storage the error processing involves the generation of error correction codes with the C1 codes being generated after the C2 codes. During data retrieval, the error processing block carries out C1 and C2 syndrome checks to identify data errors and then corrects these errors where possible, the C1 processing being effected before the C2 processing; to aid in this error correction process, data on any invalid 10-8 modulation code words received during the read operation are made available to the EPU circuit 88 by means of erasure of code words stored in sub slots 118, 119 of the corresponding track slot.

The functions of the error processing functional block are carried out in dedicated hardware in order to achieve the processing speed necessary to complete all operations within one quarter period Q. The error processing functional block may, for example, be based on a commercially available product such as the high speed Reed Solomon encoder/decoder chip AHA 4510 available from Advanced Hardware Architecture Inc, Moscow, Idaho, USA, appropriate circuitry being added to form the EPU control unit 89 to access the data being processed in the appropriate order and to store the results of the processing back in the corresponding track slot. As already indicated, the EPU control unit 89 simply provides an appropriate slot offset address to the track RAM 80 (via the DMA control unit 84), the address control unit 83 being responsible for directing the access to the correct track slot in dependence on the current state of the coordinator state machine 101.

As already noted, in order to expedite the transfer of data to and from the EPU functional block 88, 89, during CI ECC processing, the main and sub-data in the track sub slots 110 and 111 is ordered as illustrated in Figure 15, thereby facilitating the transfer of data as word units of two bytes, rather than as single bytes.

### Write Chain

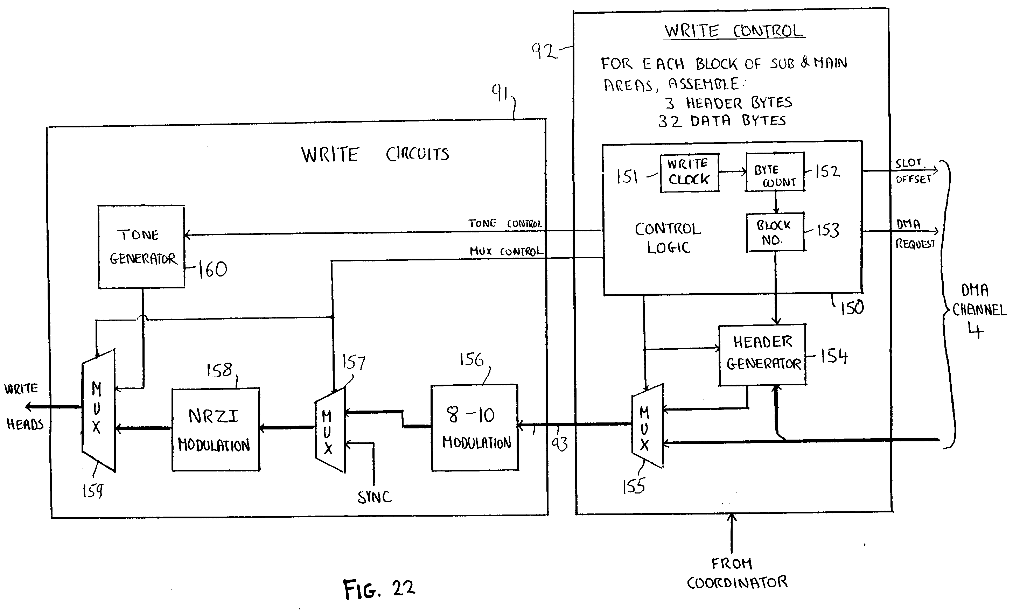

The write chain is shown in Figure 22 and comprises the write circuits 91 and the write control unit 92. The write chain is operative to extract data from a track slot of the track RAM and assemble it together with other signals to form a track signal for energizing one of the write heads HAW, HBW of the headdrum 70 to write a track to tape, this operation being carried out over a corresponding quarter period Q.

The write control unit 92 comprises control logic 150 including an accurate internal clock 151, the clock pulses of which determine the bit timing of data to be written to tape (prior to 8-10 modulation). The control logic 150 further includes a byte counter 152 driven from the clock 151. The byte counter 152 is reset at the start of writing each track to tape (as indicated by an appropriate signal from the coordinator state machine 101). The byte counter 152 keeps track of the current byte number during processing of data of a track and is used, in particular, in determining the slot offset address to be fed via DMA channel 4 to the track RAM 80 for the purpose of extracting the next data byte to be passed down the write chain for writing to tape. In addition, the byte counter 152 also provides an output once every 36 bytes to a block number unit 153 which keeps track of the current block number during processing of a track (blocks are uniquely numbered across a track).

The current block number is stored in the header of each block (in this context the header refers to the main ID of a main data block of the sub ID of a sub data block). The header of a block is assembled by a header generator 154 utilizing the current block number from the block number unit 153 and appropriate auxiliary information stored in sub slot 116 of the corresponding track slot. The control logic 150 ensures that this auxiliary data is appropriately extracted when required and passed to the header generator 154. The header generator 154 is also responsible for generating the parity check byte in the block header.

In operation, the write control unit 92 once initiated by the coordinator 101, generates slot offset addresses and appropriate DMA requests to access the data to be written from the corresponding track slot. The slot offset addresses are generated in the order of occurrence of bytes in the main and sub zone of a track block; these addresses are not sequential but take account of the byte ordering in the main-data and sub-data track slots 110 and 111 (see Figure 15). Data extracted from the main-data or sub-data sub slots 110 and 111 is passed via DMA channel 4 and a multiplexer 155 of the control unit 92 to the write circuits 91. Data relating to the block headers is passed to the header generator 154 and the resultant header is then passed through the multiplexer 155 to the write circuits 91. The multiplexers 155 is controlled by the control logic 150. It will be understood that the block headers in fact come before the blocks to which they relate.

The data passing from the multiplexer 155 to the write circuits 91 then undergoes several stages of formatting, including combination with other signals. Thus, the data first undergoes 8-10 modulation in unit 156 before the resultant modulation codewords are combined with a sync pattern in multiplexer 157, the latter being controlled by the control logic 150. The output of the multiplexer 157 is then fed to a NRZI modulation unit 158, the output of which is, in turn, fed to a multiplexer 159 to which is also fed the output of a tone generator 160. The tone generator 160 and the multiplexer 159 are also controlled by the control logic 150. The output of the multiplexer 159 is a track signal which is fed to the head drum to energize an appropriate one of the write heads HAW, HBW.

### Read Chain

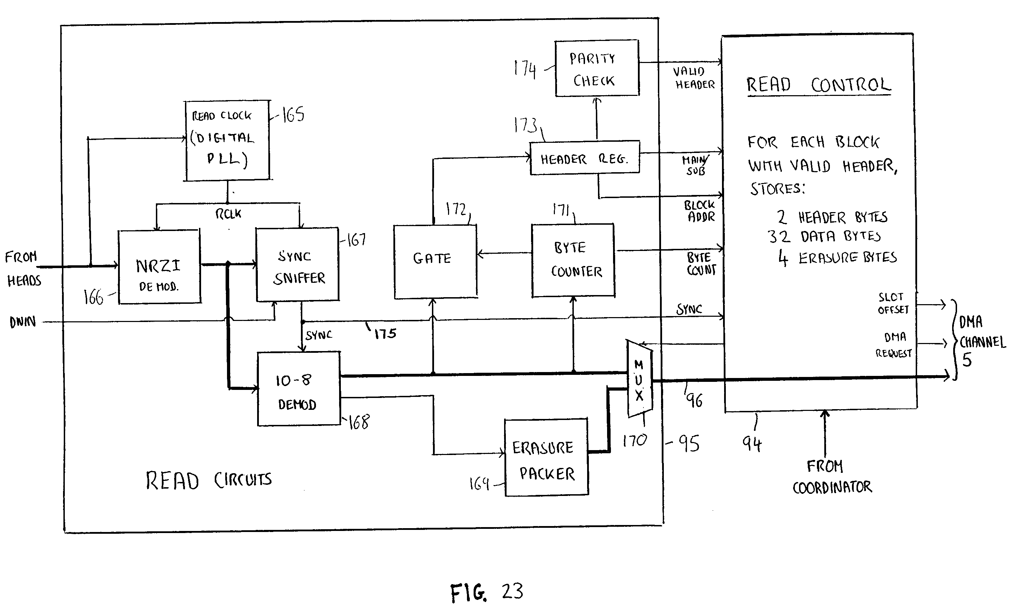

The read chain is illustrated in Figure 23 and as already indicated comprises the read circuits 95 and the read control unit 94. The read chain processes signals from the read heads HAR, HBR of the head drum during the quarter period Q that a read head is over the tape, and passes the main zone and sub zone data extracted from the track signal to the appropriate slot of the track RAM 80 through DMA channel 5.

More particularly, the track signal input to the read circuits 95 feeds both a digital phase-locked loop circuit (constituting a read clock) 165 and a NRZI demodulation unit 166. The digital PPL circuit 165 recovers a clock signal from the input track signal and feeds this clock signal to the demodulation unit 166 and also to a sync sniffer 167. The output of the demodulation unit 166 is also fed to the sync sniffer. The sync sniffer 167 is enabled by the signal DWIN to search for a valid sync signal pattern during periods when the read heads are over a portion of the tape corresponding to the main zone or sub zones of a track. The sync sniffer operates by reading in 10 channel bits (that is, 8-10 modulation codeword bits) and comparing them with the predetermined sync pattern; if no match is found, the ten channel bit pattern held in the sync sniffer is shifted by one and the comparison carried out again, this process being repeated until a match is detected. Upon the sync sniffer 167 detecting a sync pattern, it outputs a sync signal on line 175 to indicate that the start of a block has been detected (each block of the main zone and sub zone of a track being commenced with a sync pattern).

Thereafter, the 10-8 demodulator 168 decodes each group of ten channel bits (a modulation codeword) into a corresponding 8-bit data byte until the end of a block is reached. If all modulation codewords are correct, then the demodulation unit 168 will output 35 bytes following the detection of each sync pattern, these 35 bytes being constituted by three block header bytes and 32 data bytes. A byte counter 171 connected to a gate 172 is used to tap off the header bytes to a header register 173 whilst the remaining 32 data bytes are passed to a multiplexer 170 controlled by the read control unit 94. The byte counter 171 also outputs a byte count value to the unit 94 enabling this unit to track progress through a block.

To facilitate error detection and correction, the presence of any errored modulation codewords received by the demodulation unit 168 is indicated by the setting of a corresponding erasure bit output from the unit 168 to an erasure packer 169. This erasure packer 169 is thus fed with one erasure bit for each of the 32 data bytes in a block, the packer 169 being operative to assemble the resultant 32 erasure bits to form 4 erasure bytes per block which are fed to the multiplexer 170. The state of each erasure bit indicates whether the corresponding data byte is in error. In fact, where the modulation code word is invalid, a null data byte is output from the demodulation unit 168 to the multiplexer 170.

The contents of the header register 173 are applied to a parity check circuit 174 to check their validity, the results of this check being fed to the read control unit 94. In addition, the block address for the current block is extracted from the data held in the header register 173 and is also passed to the read control unit 94 as is an indication of whether the block is a main zone block or a sub zone block.

For each main zone and sub zone data block of a track, the read control unit 94 oversees the transfer to the corresponding track slot in the track RAM 80, via DMA channel 5, of the two data-containing block header bytes (that is, not the parity byte), 32 data bytes, and 4 erasure bytes. To this end the read control unit 94 appropriately controls the multiplexer 170 and also requests access to the track RAM by an appropriate DMA request made to the DMA control unit 84. The read control unit 94 also generates the slot offset address to be provided to the track RAM 80, this slot offset address being dependent on the block address of the current block being processed and the byte number within the current block; due to the ordering of data bytes in the main-data and sub-data track sub-slots 110, 111, described above with reference to Figure 15, the slot offset addresses generated will not be sequential.

### Read-After-Write Block

The read-after-write functional block 97, 98 operates to check the validity of data written to tape as this data is subsequently read back an interval of 5Q after being written and during the same pass of the tape past the head drum. This check is performed substantially during the period Q when the track concerned is being read back by the corresponding read head whereby there is no need to store the read-back data. The check involves the comparison of the read-back data with a version of the original data retained in the track RAM, this test being a full comparison test carried out by unit 99. In addition, a C1 syndrome check is also carried out by unit 100 on the data read back from tape. The retrieval of the data retained in the track RAM is effected through the write chain.

More particularly, when read-after-write (RAW) processing is being effected, the read chain operates to pass each data byte of each main-zone and sub-zone block of a track to the units 99 and 100 of the RAW circuit 97 and, at the same time, to pass the block address and byte count of each data byte to the RAW control unit 98. The RAW control unit processes the block address and byte count to derive the slot offset of the corresponding retained byte. This slot offset address is transferred to the write control unit of the write chain which then proceeds to access the track RAM 80 and extract the corresponding retained data byte. The accessed retained data byte is then passed by the write chain to the RAW circuits 97 where it is compared with the read-back byte. The RAW circuits 97 are arranged to keep a tally of the number of blocks found to be in error for a track on which RAW processing is being carried out. At the end of the RAW check on a track, the RAW control unit 98 requests the read control unit 95 to store the blocks-in-error count accumulated by the RAW circuits 97 into the sub slot 117 of the appropriate track RAM slot.

It will be appreciated that the read chain and write chain can be co-opted to participate in the RAW processing since during the frame quarter period Q when this processing is being effected, the read chain and write chain are not otherwise utilized. The read chain, write chain and RAW processing block are all coordinated to participate in the RAW processing by the coordinator 101.

### Sequencing During Data Retrieval

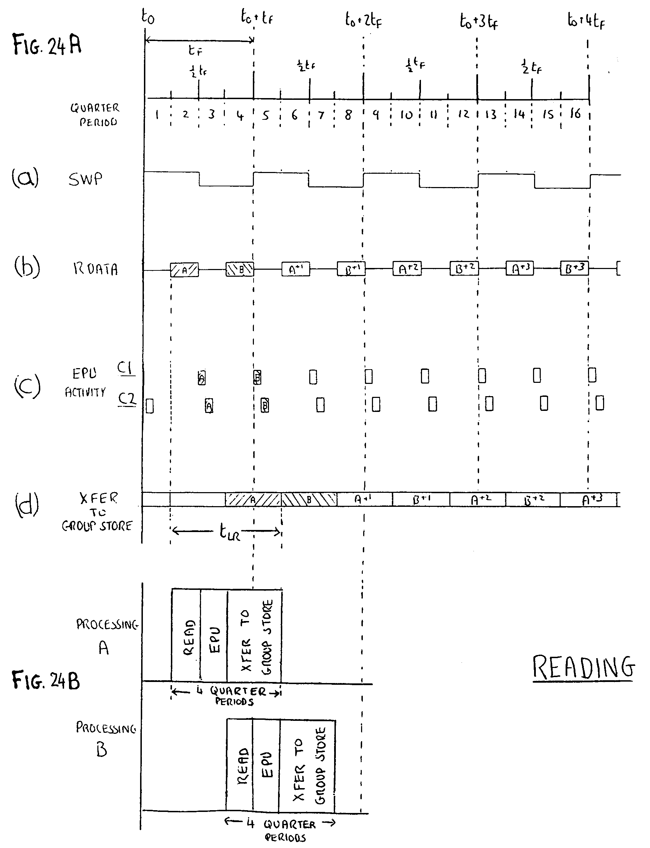

The operation of the Figure 12 frame processor will now be considered in relation to the retrieval of data from tape, reference being had to the timing diagrams of Figures 24A and 24B.

More particularly, Figure 24A illustrates the process of reading four successive frames from tape during four revolutions of the head drum; for convenience, the positive and negative azimuth tracks associated with each frame are labelled A and B together with an appropriate frame-dependent superscript, the first pair of tracks carrying no such superscript, the second pair of tracks being superscripted with (+1), the second pair of tracks being superscripted (+2) and so on. The time axis shown at the top of Figure 24A is divided into 16 quarter periods.

Line (a) of Figure 24A illustrates the head swap signal SWP and, as already mentioned, when the signal is high the heads concerned with writing/reading the positive azimuth track A of each frame are over the tape; more particularly, the read head HAR scans the tape during the second half of the period when the signal SWP is high. Thus, as indicated in line (b) head HAR reads track A during the second of the illustrated quarter periods. Similarly, head HBR reads track B during the fourth quarter period. This process is then repeated for each frame with, for example, track A⁺¹ being read during the sixth quarter period and track B⁺¹ being read during the eigth quarter period.

As the tracks are scanned by the heads HAR and HBR, the read chain 94, 95 processes the read-in data in the manner already described and passes the data to the track RAM 80 for storage in corresponding track slot, all this occuring during the same quarter period as in which the data is read from tape.

Following the reading in of track data off the tape into the track RAM 80, during the next quarter period this data is accessed by the error processing block 88, 89 and subjected to C1 and C2 error checking and correction with the results of this process being stored back into the track RAM 80 in the same track slot. Thus, as illustrated in line (c) of Figure 24A, data from track A which is read in during the second quarter period is subject to error processing during the third quarter period, whilst data read in from track B during the fourth quarter period is subject to error processing during the fifth quarter period.

After the data of each track has undergone error processing, it is then transferred to the group processor 52 by the transfer functional block 85, 86 during the following two quarter periods. Thus as illustrated in line (d) of Figure 24A, the data from track A is transferred out of the relevant track slots of the track RAM 80 and passed to the group processor during quarter periods 4 and 5 whilst the data from track B is transferred to the group processor during quarter periods 6 and 7.

It can thus be seen from Figure 24A that the read latency t_{LR} of the Figure 12 frame processor (that is, the time it takes for a track to be read in and processed by the frame processor) is four quarter periods Q. Figure 24B shows for tracks A and B, the sequence of processing operations and how these operations inter-relate for the two tracks; in particular, it can be seen that whilst data from one track is being transferred to the group processor 52, data from the next track is being read into the track RAM 80 and undergoing error processing.

Because it only takes four quarter periods to process a track and these tracks are only being read in at a rate of one track every two quarter periods, the frame processor is only required to handle two tracks at any one time during data retrieval. Accordingly, only two of the five track slots of the track RAM 80 need be utilized.

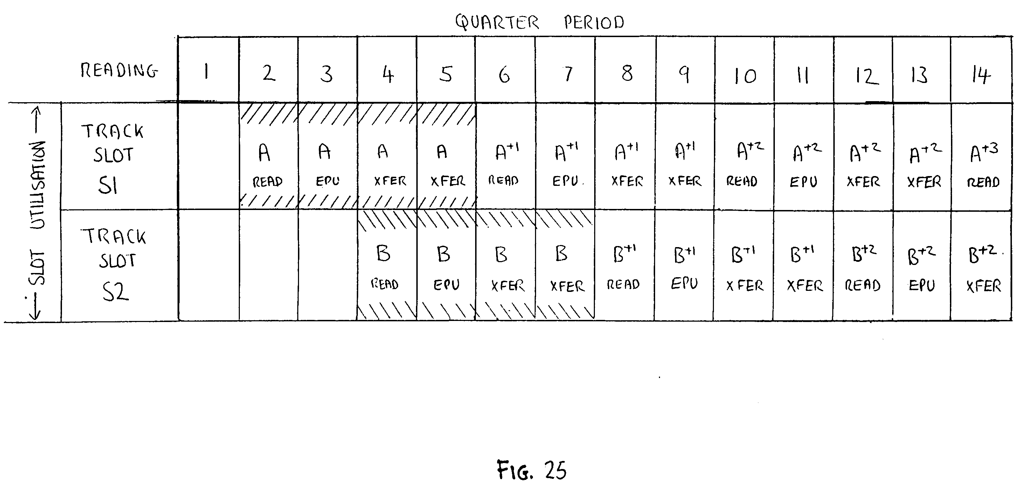

Figure 25 illustrates the cyclic utilisation of track slots S1 and S2 during the data retrieval process depicted in Figure 24. Thus, where slot S1 is used to store data read in from track A during the second illustrated quarter period, then this slot retains track A data for four quarter periods, the data undergoing error processing during the third illustrated quarter period and transfer out to the group processor during the fourth and fifth quarter periods. Meanwhile, track B data read-in during the fourth quarter period is stored in track slot 52 and is also retained for four quarter periods. During the sixth illustrated quarter period when transfer out of track A data has been completed and transfer out of track B data is just commencing, data from track A⁺¹ is read in from tape and is stored in slot S1 since use of this slot for track A data has terminated. Similarly, at the start of the eighth quarter period, track slot S2 is used to store data from track B⁺¹ as it is read in from tape.

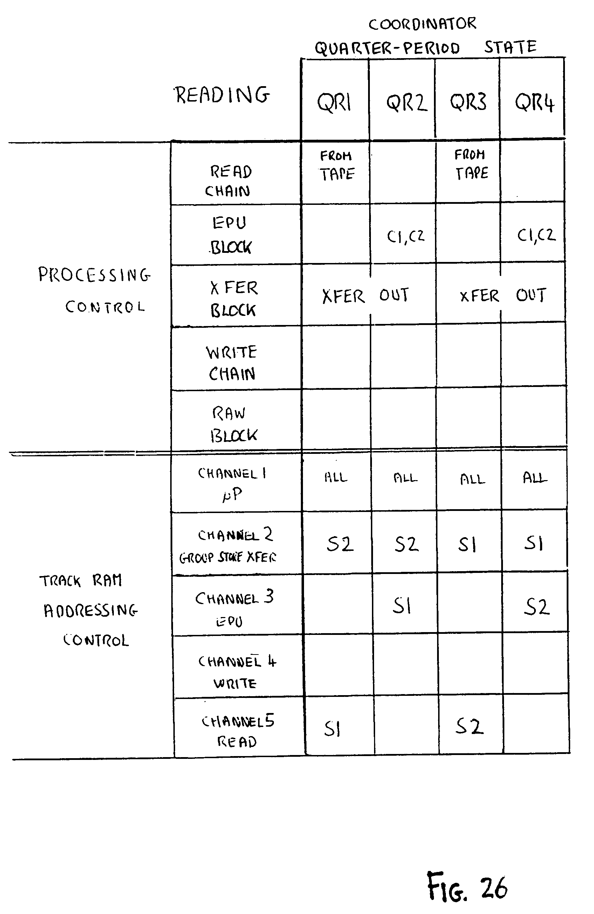

The operation of the coordinator 101 in coordinating the functional elements of the frame processor during data retrieval can be understood from the top half of the table shown in Figure 26. As already noted, the coordinator 101 is built around a state machine. During a data retrieval operation, this state machine cycles through 4 main states with the current state being changed at the start of each quarter period; the successive states of the coordinator 101 are referred to below as quarter-period (read) states QR1 to QR4. The top part of the Figure 26 table illustrates for each of these quarter-period states QR1 to QR4 which of the functional blocks is enabled by the coordinator 101 in response to the microprocessor 55 requesting the retrieval of a frame of data from tape. Thus, during the quarter period when the coordinator 101 is in its quarter-period state QR1, the read chain is enabled to transfer data from tape to the track RAM and, in addition, the transfer functional block is enabled to transfer out data from a previously-read track from the track RAM to the group processor 52.

During the quarter period when the coordinator 101 in its quarter-period state QR2, the EPU functional block is enabled to carry out C1 and C2 processing on the track just read in from tape and, at the same time the transfer functional block remains enabled to complete the transfer of the preceding track data to the group processor. During the quarter periods when the 101 is in its quarter-period states QR3 and QR4, the same functional blocks are enabled as for the states when the coordinator is in states QR1 and QR2 (the reason why four states QR1 to QR4 are required rather than just two will become apparent below when considering how track slots are allocated).

Allocation of track slots to data being transferred in and out of the track RAM 80 is under the control of the address control unit 83. This allocation is effected in dependence upon the current state of the coordinator 104 and on the identity of the DMA channel (and therefore of the functional element) accessing the track RAM 80 through the DMA control unit 84. The lower part of the Figure 26 table indicates the slot to which access is enabled by the unit 83 for each quarter-period state QR1 to QR4 of the coordinator 101) and for each of the five DMA channels. More particularly, when the coordinator is in its quarter-period state QR1, the address control unit 83 will direct accesses from channel 2 to slot S2 and accesses from channel 5 to slot S1; for quarter-period state QR2, accesses from channel 2 will again be directed to slot S2 and accesses from channel 3 to slot S1; for quarter-period state S3, accesses from channel 2 will be directed to slot S1 whilst accesses from channel 5 will be directed to slot S2; and for quarter-period state QR4, accesses from channel 2 will be directed to slot S1 and from channel 3 to slot S2. Thereafter, the cycle of accesses is repeated. For every quarter-period state, microprocessor accesses via channel 1 are permitted to access any area of the track RAM 80.

It will be appreciated that during initiation and termination of data retrieval from tape, the operation of the Figure 12 frame processor will differ to some degree from that described above for the steady-state reading situation and that, accordingly, the coordinator state machine 101 has a number of auxiliary states additional to the four main states described above. The implementation of the initiation and termination phases of reading will not be herein described as persons skilled in the art will be able to derive appropriate implementations on the basis of the foregoing disclosure without undue difficulty.

### Sequencing During Data Storage

The operation of the Figure 12 frame processor during the process of writing data to tape (including a read-after-write check) will now be described with reference to the timing diagrams of Figure 27A. Figure 27A is similar to Figure 24A in that it shows the operation of the frame processor over an interval of 16 frame quarter periods though of course, Figure 27A relates to data storage whilst Figure 24A relates to data retrieval. Furthermore, the operation of the frame processor is shown in Figure 27A with reference to successive frames starting with a frame made up of tracks A and B and continuing with a frame composed of tracks A⁺¹, B⁺¹, a next frame composed of tracks A⁺², B⁺², and so on.

Line (a) of Figure 27A shows the head swap signal SWP which is high during the first two quarter periods of a frame period when the read and write heads HAW and HAR are scanning the tape, and low during the second two quarter periods of a frame period when the heads HBW and HBR are scanning the tape.

Line (b) of Figure 27A shows the transfer into the track RAM 80 of data relating to successive tracks from the group store 52. Thus, during the second and third illustrated quarter periods, data relating to track A is transferred from the group store 57 of the group processor 52 into the track RAM 80 whilst during the fourth and fifth illustrated quarter periods, data relating to track B is transferred into the track RAM 80.

Line (c) of Figure 27A illustrates the activity of the EPU functional block 88, 89. Thus, during the fourth illustrated quarter period, the track A data is accessed from the track RAM 80 by the EPU block 88, 89 and subject first to C2 ECC code generation and then to C1 ECC code generation, the generated code words being stored back into the appropriate track slot as part of the main and sub data for track A. Track B data similarly undergoes EPU processing during the sixth illustrated quarter period.

Line (d) of Figure 27A, shows the writing of tracks to tape through the write chain 91, 92 and the write heads of the drum 70. During the fifth illustrated quarter period, track A data is accessed from the track RAM 80 and passed through the write chain during which it is assembled together with other signals to form a track signal which is then fed to the corresponding head of the head drum. Track B data is similarly processed into a track signal during the sixth quarter period.

It can thus be seen that the write processing latency t_{LW} of the Figure 12 frame processor for a simple write operation (that is, one not involving a read-after-write check) is four frame quarter periods Q. During this write processing, one track is undergoing EPU processing and being written to tape through the write chain at the same time as data relevant to the next track is being transferred in from the group processor. It will therefore be appreciated that for such a writing operation, only two track slots of the track RAM 80 need be utilized (in a manner analogous to utilization of the track slots during data reading).

However, where read-after-write checking is carried out, it is necessary to use more than two track slots because after data relevant to a particular track has been written to tape through the write chain, it is retained in the track RAM 80 until the corresponding track is read back through the read chain for comparison with the read data. The delay period between the end of writing of a track and the start of reading back of that track depends on the geometry of the head drum. As already mentioned, in the present embodiment, this geometry is such that the delay period is equal to four quarter periods Q; more generally, however, this delay period may be specified as a period of 2NQ where N is an integer greater than zero (in the present case, N equals 2).

Line (e) of Figure 27A shows the reading back of tracks through the read chain for the purpose of carrying out a RAW check. As can be seen, track A is read back during the tenth illustrated quarter period, that is after a delay of four quarter periods since the end of writing of that track to tape. Track A on being read back is processed by the read chain and fed to the RAW functional block 97, 98 where it is compared with the corresponding data for track A retained in the track RAM and now accessed for comparison through the write chain DMA channel 4. A C1 syndrome check is also carried out at the same time as the full data compare check. As illustrated in line (f) of Figure 27A, the RAW processing is carried out substantially during the same quarter period as the track is read back from tape, although there is a slight overrun of this processing into the next quarter period as illustrated by the time interval t_{LRAW}. The results of the RAW check are stored back into the appropriate slot of the track RAM (that is, the slot used to retain the track data written to tape) through the read chain DMA channel 5.

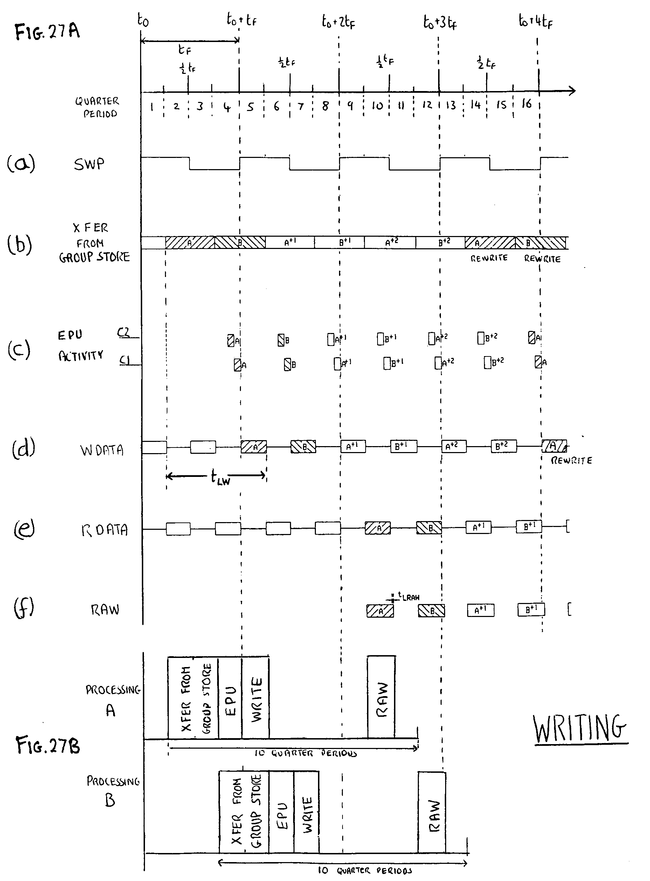

Figure 27B illustrates for tracks A and B the processing undergone by the track data during writing to tape and the subsequent RAW check. As can be seen, the processing of each track occupies ten quarter periods Q in all though during four of the quarter periods no processing is being effected whilst during the last quarter period, the processing is minimal. It will be appreciated that if the processing of each track takes ten quarter periods and the tracks are being written to tape one every two quarter periods, then the frame processor must have the capability of handling 5 tracks at any one time and accordingly the track RAM is sized to have five track slots S1 to S5.

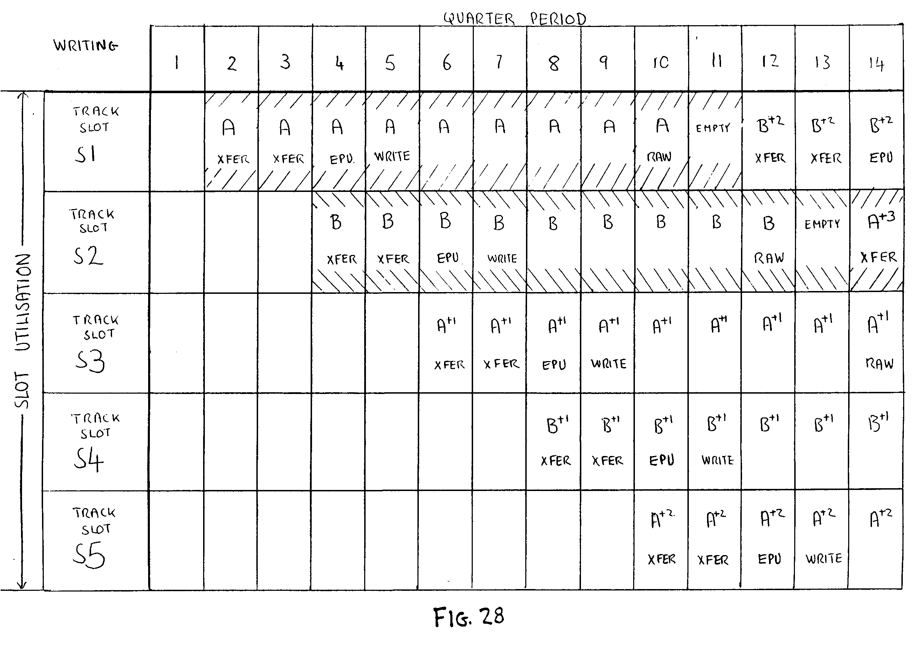

The utilization of these track slots during data storage is illustrated in Figure 28 for the writing of the tracks referenced in Figure 27. Thus, it can be seen from Figure 28 that if track A is written to track slot S1 as it is transferred in from the group processor during quarter periods 2 and 3, then it will occupy this track slot at least until the end of the tenth quarter period and is then utilized again for a new track from the twelfth quarter period onwards. Meanwhile, if data relevant to track B is transferred in during the fourth and fifth illustrated quarter periods from the group processor into track slot S2, then this track slot retains the track B data from the fourth quarter period to at least the end of the twelfth quarter period and it then reutilized from the 14th quarter period onward for another track. Track slots S3, S4, and S5 are similarly utilized (it should be noted with reference to Figure 28 that tracks proceeding track A have not been illustrated simply for reasons of clarity).

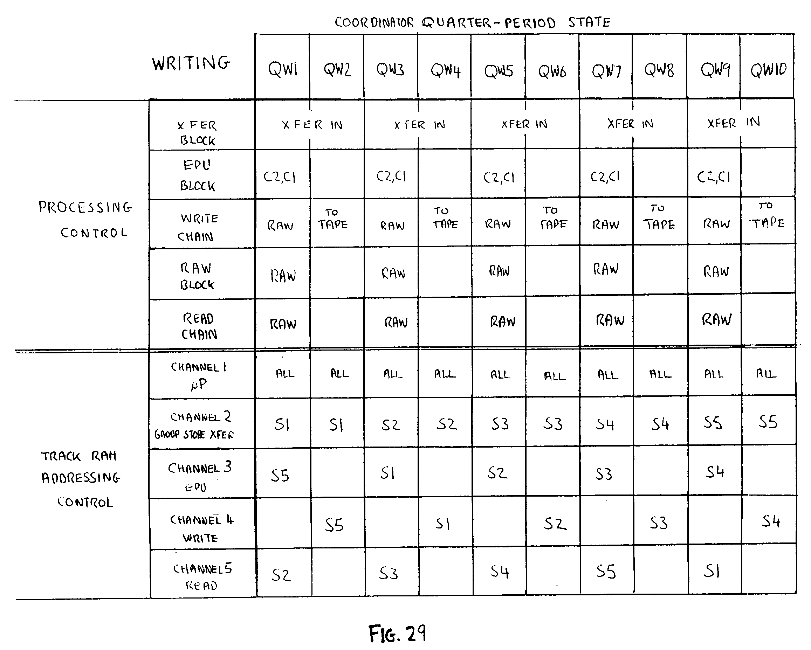

In controlling the operations of the functional blocks of the frame processor, the coordinator state machine 101 cyclically progresses through ten states, residing in each state for one quarter period; these states are referenced in the following description as quarter-period (write) states QW1 - QW10. The coordinator state machine is set into the first one of these states Q1 upon the microprocessor 55 requesting the writing of a frame of data from the group processor 52 to tape and thereafter the coordinator cycles through its ten states for each five tracks written to tape. The top half of the table illustrated in Figure 29 shows for each quarter-period state of the coordinator 101 which of the functional blocks of the Figure 12 frame processor is enabled and the activity for which that block is enabled. Thus, during the quarter-period state QW1, the transfer functional block is enabled to transfer in a track's worth of data from the group processor, the EPU functional block is enabled to carry out ECC code generation on a previously transferred-in track's worth of data, and the read chain, RAW block, and write chain are enabled to participate in a RAW check on a track earlier written to tape. In its next quarter-period state, the coordinator 101 continues to enable the transfer functional block to complete the transfer in of the track's worth of data from the group processor and enables the write chain to write the data subject to error processing during state Q1 to tape through the read chain. The enabling of the functional blocks by the coordinator 101 during its states QW1 and QW2 is repeated during states QW3, QW4; QW5, QW6; QW7, QW8; and QW9, QW10.

The lower half of the Figure 29 table illustrates the allocation of track slots by the address control unit 83 of the Figure 12 frame processor. Thus, when the coordinator is in its quarter-period state QW1, the address control unit 83 will direct accesses from channel 2 to track slot S1, from channel 3 to track slot S5 and from channel 5 to track slot S2. Similarly, when the coordinator is in its quarter-preiod state QW2, the address control unit 83 directs accesses from channel 2 to track slot S1 and from channel 4 to track slot S5 and so on. It can be seen that this pattern of accesses ensures that the various functional blocks access data relevant to the appropriate track as the processing of that track proceeds during the write operation. For example, it can be seen that track slot S1 is made available to channel 2 for a transfer in of data in quarter-period states QW1, QW2, is made available to channel 3 for ECC in during quarter-period state QW3, is made available to channel 4 for writing to tape in quarter-period state QW4, and is made available to channel 5 for RAW comparison with read back data in quarter-period state QW9.

During every quarter-period state QW1 to QW10, accesses through DMA channel 1 by the microprocessor are permitted to any area of the track RAM 80.

It will appreciated that in cases where the head geometry is such that the value of N differs from 2, the required number of track slots will also differ as will the number of states in the main cycle of the coordinator state machine during data writing with RAW checking. Generally, the number of track slots required may be expressed by the formula (3+N). It will also be appreciated that during initiation and termination of writing, the operation of the frame processor will differ somewhat from that described above but appropriate control functions will be apparent to persons skilled in the art on the basis of the foregoing disclosure.

### Microprocessor Accesses

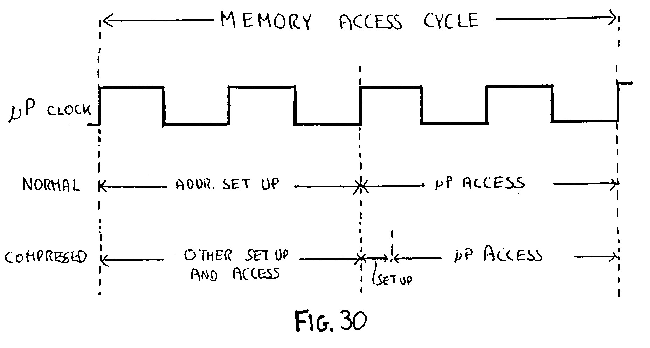

The microprocessor 55 is, for example, a Motorola 68000 chip with supporting circuitry. The microprocessor 55 is arranged to access memory during a memory access cycle which occupies four cycles of the microprocessor clock (see Figure 30). Normally during a memory access cycle the first two clock cycles are used for setting up the address to be accessed and the second two clock cycles are actually used to access the information at the set up address. However, if high speed RAM memory chips are used, it is possible to compress the address set-up time into a small fraction of one microprocessor clock cycle. As a result, microprocessor memory access can actually be performed in two microprocessor clock cycles as illustrated in the "compressed" line of Figure 30. So far as the microprocessor itself is aware it is executing a normal memory access cycle but the DMA control unit 84 is arranged to handle the signals from the microprocessor in such a way that it implements the required access in two microprocessor clock cycles. The other two microprocessor clock cycles can then be used to permit access through another one of the DMA channels 2 - 5. The overall result is that so far as the microprocessor is concerned, it gains access to the track RAM every memory access cycle without apparent delay; in addition, the arrangement also guarantees that even if the microprocessor 55 continuously requires access to the track RAM (which will not normally be the case) at least 50% of the track RAM access bandwidth is available to the other functional blocks of the frame processor through channels 2 - 5.

### Variants

It will, of course, be appreciated that many variants are possible to the described detailed implementation of the frame processor illustrated in Figures 12 to 30.

Furthermore, the general structure and sequencing concept of the Figure 12 frame processor can also be applied to different configurations of head drums such as where the head drum is arranged to write/read tracks immediately one after another without an intervening gap (in the described embodiment there was, of course, a period Q between the writing or reading of successive tracks); a typical head drum to which the structure and sequencing concepts of the Figure 12 frame processor could be applied is one where the drum carries two, diametrically opposed, write/read heads and the rap angle of tape around the drum is 180°. In this latter case, if the time taken to write/read one track is designated T, then during data storage, in each period T one track is being transferred in to the track RAM from the group processor, the track transferred in during the previous period T is undergoing error processing by the error processing unit, and the track that underwent error processing in the aforesaid previous period T is being written to tape; and during data retrieval, in each period T one track is being read from tape, the track that was read from tape during the previous period T is undergoing error processing in the error processing unit, and the track that in the aforesaid previous period T underwent error processing is being read out from the track RAM to the group processor. With such an arrangement, the track RAM 80 is required to have sufficient capacity for at least three track slots.

It will also be appreciated that certain features of the Figure 12 frame processor can be implemented independently of other features of the frame processor. In particular, the ability of the system controller microprocessor 55 to access sub-codes stored in the track RAM 80 is a particularly useful feature of the general structure of the Figure 12 frame processor regardless of the sequencing of track processing overseen by the coordinator 101.

## Claims

1. Data storage apparatus for storing and retrieving data on tape using a helical scanning write/read technique with data being stored in tracks of predetermined format written across the tape, said apparatus comprising a tape deck with a rotary head drum mounting heads for writing/reading data to/from the tape in tracks with each track being written/read during a time interval Q and the average transfer rate of tracks to/from the tape being 1/(2Q), frame processor both for processing data into said track format prior to being written to tape by said heads and for processing data out of said track format after being read from tape by said heads, and a system controller for controlling and coordinating the operation of said apparatus; said frame processor comprising:
- memory means for the temporary storage of data being processed by the frame processor in the course of being stored to / retrieved from tape,
- transfer means for receiving and storing in said memory means data to be processed into said track format for storage to tape, and for outputting from said frame processor, data stored in said memory means which has been processed out of said track format after being retrieved from tape,
- error processing means for accessing data stored in said memory means and generating error correction codes during processing of data into said format and effecting error detection/correction during processing of data out of said format, said error correction codes being stored in said memory means,
- a write chain for generating track signals from data, including associated error correction codes, stored in said memory means and for passing said signals to said heads for writing to tape,
- a read chain for receiving track signals read from tape by said heads and for storing in said memory means data represented by said track signals,
- a DMA controller for regulating access to said memory means by said transfer means, said error processing means, said write chain and said read chain, and
- control means for controlling and coordinating the operation of said processing means such that data being stored to/retrieved from different tracks can be simultaneously handled by the frame processor at different stages of processing thereby,
the operation of said frame processor being such that during data storage, in each successive period of 2Q one track is being transferred into said memory means by said transfer means, whilst the track transferred in during the preceding period 2Q is undergoing error processing by said error processing means during a first sub-period Q and being stored to tape through said write chain during a second sub-period Q, and during data retrieval, in each successive period 2Q one track is being transferred out of said memory means by said transfer means, whilst a following track is being retrieved from tape through said read chain during a first sub-period Q and undergoing error processing by said error processing means during a second sub-period Q.

2. Data storage apparatus according to claim 2, wherein said memory means is sized to store the data for two, and only two, tracks during storage/retrieval of data to/from said tape.

3. Data storage apparatus according to claim 1, wherein during the process of writing data to tape, each track of data written to tape is read back and compared with the original form of that data, for which purpose: (i) the said head drum is provided with separate write and read heads that scan the tape alternately such that data written to tape is read back on the same pass of the tape past the head drum, (ii) said memory means is operative to retain data being written to tape after it has been accessed by said write chain in the course of generating corresponding said track signals therefrom, and (iii) the said frame processor further comprises read-after-write processing means operative during a data writing process to compare data read back after writing with the form of the same data retained in said memory means; said read-after-write means comprising :
- comparator means,
- means operative to cause data which has been read back by said head drum to be processed by said read chain and passed to said comparator means, and
- means for identifying read-back data and for accessing the corresponding data in said memory means and passing it to said comparator means for comparison with said read-back data,
said comparator means being operative to effect a full data compare of said read-back data with the form of that data retained in the memory means and to generate an error indication in the event of a discrepancy between said read-back and retained data.

4. Data storage apparatus according to claim 3, wherein said read-after-write processing means is operative to access the said retained data stored in the memory means by utilising the memory access capability of said write chain.

5. Data storage apparatus according to Claim 3 or Claim 4, wherein said read-after-write processing means is operative to write said error indication to said memory means by utilizing the memory access capability of said read chain.

6. Data storage apparatus according to any one of claims 3 to 5, wherein the head drum is such that between the end of writing a track and the start of reading back of the same track, there is a delay of 2NQ where N is an integer greater than zero, said full data compare on that track being effected during a said sub-period Q when a next-to-be-written track is being processed by the error processing means.

7. Data storage apparatus according to claim 6, wherein said memory means is sized to store the data for only (3+N) tracks.

8. Data storage apparatus according to any one of claims 2 to 7, wherein said system controller is operative to access said memory means in order to write/read auxiliary codes therein during data storage/retrieval, said frame processor being operative during data storage to combine said auxiliary codes and data held in said memory means for writing to tape and, during data retrieval, to store in said memory means auxiliary codes recovered with data read from tape.

9. Data storage apparatus according to claim 8, wherein said system controller comprises a microprocessor operative to access said memory means according to a memory access cycle, the DMA controller being arranged to guarantee the microprocessor access to said memory means during every memory access cycle executed by the microprocessor without delay, whilst also permitting at least one access to said memory means by a functional element of the frame processor during that memory access cycle.

10. Data storage apparatus according to any one of the preceding claims, further comprising data organising means associated with said frame processor such that the latter is operatively interposed between the data organising means and tape deck; said data organizing means being operative (i) during data storage, to receive data to be stored and to organize it into frame units each corresponding to two track's worth of data, and (ii) during data retrieval, to disassemble the data out of frame units for output from said apparatus, said data organizing means including a buffer memory for holding said frame units; and the said transfer means of said frame processor being operative (i) during data storage, to transfer data in from said buffer memory with constituent data elements from each frame unit being interleaved with each other across the whole frame unit, and (ii) during data retrieval, to transfer out said data to said buffer memory to store it therein in de-interleaved form, said transfer means being such that the transfer of data to/from said buffer memory is effected on a track by track basis with the transfer of data in respect of one said track being completed before the transfer of data in respect of the next said track is commenced.

11. Data storage apparatus according to any one of the preceding claims, wherein said error processing means is operative to effect a C1 error correcting stage substantially as specified in the DDS Standard (**ISO/IEC 10777: 1991**) with an interleave depth of two, said frame processor being operative to store data bytes in said memory means in a manner such that bytes associated with the same C1 codeword are contiguous whereby to facilitate word accesses to this data by the error processing means.

12. Data storage apparatus according to any one of the preceding claims, wherein said control means comprises a coordinating state machine having a plurality of states arranged in an operating cycle with one said state constituting the current state of the state machine at any given time, the state machine being operative to change its said current state every period Q in coordination with scanning of the tape by said head drum and to control the operation of the functional elements constituted by the transfer means, the error processing means, the write chain, the read chain and, where present, the read-after-write processing means in dependence on the state machine's current state.

13. Data storage apparatus according to claim 12, wherein said control means further comprises a respective function control circuit for each of the said functional elements, said system controller being operative to instruct the coordinating state machine to store/retrieve tracks of data and the coordinating state machine thereupon progressing around its operating cycle of states and in doing so, instructing said function control circuits to activate and control their corresponding functional elements such as to effect the required storage/retrieval of tracks.

14. Data storage apparatus according to claim 12 or claim 13, wherein said memory means includes a plurality of track memory slots each for storing data relevant to a particular track during the course of processing of that data by said frame processor, and address control means connected to said coordinating state machine to receive a first indication indicative of the current state thereof and to the said DMA controller to receive a second indication indicative of the identity of the functional element given access to the memory means by the DMA controller, said address control means being responsive to said indications to direct access by the accessing functional element to an appropriate one of said slots.

15. Data storage apparatus according to any one of the preceding claims, wherein the processing effected by said frame processor corresponds substantially to the overall processing specified in the DDS Standard (**ISO/IEC 10777: 1991**) in transferring a G3 sub-group, as specified therein, to/from tape.

16. Data storage apparatus for storing and retrieving data on tape using a helical scanning write/read technique with data being stored in tracks of predetermined format written across the tape, said apparatus comprising a tape deck with a rotary head drum mounting heads for writing/reading data to/from the tape in tracks with each track being written/read during a time interval T and the average transfer rate of tracks to/from the tape being 1/T, frame processor both for processing data into said track format prior to being written to tape by said heads and for processing data out of said track format after being read from tape by said heads, and a system controller for controlling and coordinating the operation of said apparatus; said frame processor comprising:
- memory means for the temporary storage of data being processed by the frame processor in the course of being stored to / retrieved from tape,
- transfer means for receiving and storing in said memory means data to be processed into said track format for storage to tape, and for outputting from said frame processor, data stored in said memory means which has been processed out of said track format after being retrieved from tape,
- error processing means for accessing data stored in said memory means and generating error correction codes during processing of data into said format and effecting error detection/correction during processing of data out of said format, said error correction codes being stored in said memory means,
- a write chain for generating track signals from data, including associated error correction codes, stored in said memory means and for passing said signals to said heads for writing to tape,
- a read chain for receiving track signals read from tape by said heads and for storing in said memory means data represented by said track signals,
- a DMA controller for regulating access to said memory means by said transfer means, said error processing means, said write chain and said read chain, and
- control means for controlling ad coordinating the operation of said processing means such that data being stored to/retrieved from different tracks can be simultaneously handled by the frame processor at different stages of processing thereby,
the operation of said frame processor being such that during data storage, in each successive period of T, one track is being transferred into said memory means by said transfer means, the track transferred in during the preceding period T is undergoing error processing by said error processing means, and the track that underwent error processing during said preceding period T is being stored to tape through said write chain; and during data retrieval, in each successive period T, one track is being retrieved from tape through said read chain, the track retrieved from tape during the preceding period T is undergoing error processing by said error processing means, and the track that underwent error processing during said preceding period T is being transferred out of said memory means by said transfer means.
